# EUROPÄISCHE PATENTANMELDUNG

(11) **EP 3 862 104 A1**
(43) Veröffentlichungstag der Anmeldung: **11.08.2021**
(21) Anmeldenummer: 20155893.9
(22) Anmeldetag: 06.02.2020
(51) Int. Cl.: B21B 37/00, G05B 19/409, G05B 19/418, G06F 16/9032

(54) **VORRICHTUNG ZUR STEUERUNG UND/ODER ZUR ÜBERWACHUNG EINER TECHNISCHEN ANLAGE**

(71) Anmelder: Primetals Technologies Germany GmbH, 91058 Erlangen (DE)
(72) Erfinder: Kerschensteiner, Martin, 92348 Berg (DE); Thekale, Alexander, 91058 Erlangen (DE)
(74) Vertreter: Metals@Linz

(57) **Zusammenfassung**

Vorrichtung (1) zur Steuerung und/oder zur Überwachung einer technischen Anlage (2) zur Metallerzeugung und/oder Metallverarbeitung, mit einem Rechensystem (3) mit wenigstens einer Schnittstelle (24, 25) zum Verbinden mit wenigstens einem weiteren Rechensystem (4, 5, 6, 18) der Anlage und/oder wenigstens einer Sensorvorrichtung (11, 12, 13) der Anlage (2) und/oder mit wenigstens einer Mensch-Maschine-Schnittstelle (17), wobei das Rechensystem (3) ausgebildet ist, um über die Schnittstelle (24, 25) eine Anfrage über eine Information über die Anlage (2) von wenigstens einem anfragenden weiteren Rechensystem (4, 5, 6, 18) und/oder von einer anfragenden Sensorvorrichtung (11, 12, 13) der Anlage und/oder oder von einer anfragenden Mensch-Maschine (17) zu erhalten, wobei das Rechensystem (3) ausgebildet ist, um anhand der Anfrage zu ermitteln, welches weitere Rechensystem (4, 5, 6, 18) und/oder welche Sensorvorrichtung (11, 12, 13) und/oder welche Mensch-Maschine-Schnittstelle (17) die Anfrage beantworten kann, wobei das Rechensystem (3) ausgebildet ist, um über die Schnittstelle (24, 25) die angefragte Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) einzuholen und auszugeben.

## Beschreibung

Die Erfindung betrifft eine Vorrichtung zur Steuerung und/oder zur Überwachung einer technischen Anlage zur Metallerzeugung und/oder Metallverarbeitung und ein Verfahren zur Steuerung und/oder zur Überwachung einer technischen Anlage zur Metallerzeugung und/oder Metallverarbeitung.

Aus EP 3 293 594 A1 ist eine Vorrichtung und ein Verfahren zur Steuerung und/oder zur Überwachung einer technischen Anlage zur Metallerzeugung und/oder Metallverarbeitung bekannt.

Die Aufgabe der Erfindung besteht darin, eine verbesserte Vorrichtung und ein verbessertes Verfahren zur Steuerung und/oder zur Überwachung einer technischen Anlage zur Metallerzeugung und/oder Metallverarbeitung bereitzustellen.

Die Aufgaben der Erfindung werden durch die unabhängigen Patentansprüche gelöst.

Vorteilhafte Ausführungsformen der Vorrichtung und des Verfahrens sind in den abhängigen Ansprüchen angegeben.

Es wird eine Vorrichtung zur Steuerung und/oder zur Überwachung einer technischen Anlage zur Metallerzeugung und/oder Metallverarbeitung vorgeschlagen. Die Vorrichtung weist ein Rechensystem mit wenigstens einer Schnittstelle zum Verbinden mit wenigstens einem weiteren Rechensystem der Anlage und/oder wenigstens einer Sensorvorrichtung der Anlage und/oder mit wenigstens einer Mensch-Maschine-Schnittstelle auf. Das Rechensystem ist ausgebildet, um über die Schnittstelle eine Anfrage über eine Information über die Anlage von wenigstens einem anfragenden weiteren Rechensystem und/oder von einer anfragenden Sensorvorrichtung der Anlage und/oder oder von einer anfragenden Mensch-Maschine-Schnittstelle zu erhalten. Das Rechensystem ist ausgebildet, um anhand der Anfrage zu ermitteln, welches weitere Rechensystem und/oder welche Sensorvorrichtung und/oder welche Mensch-Maschine-Schnittstelle die Anfrage beantworten kann. Zudem ist das Rechensystem ausgebildet, um über die Schnittstelle die angefragte Information von dem wenigstens einen ermittelten weiteren Rechensystem und/oder von der wenigstens einen ermittelten Sensorvorrichtung und/oder von der wenigstens einen ermittelten Mensch-Maschine-Schnittstelle einzuholen. Weiterhin ist das Rechensystem ausgebildet ist, um die eingeholte Information über die Schnittstelle an das anfragende weitere Rechensystem und/oder an die anfragende Sensorvorrichtung der Anlage und/oder an die anfragende Mensch-Maschine-Schnittstelle auszugeben. Die eingeholte Information kann insbesondere von einem der Rechensysteme verwendet werden, um in die Steuerung einer Funktion der Anlage einzugreifen und die Steuerung zu ändern. Beispielsweise kann das Rechensystem, das die Anlagenautomatisierung ausführt, die eingeholte Information verwenden, um die Steuerung der Anlage zu ändern.

Auf diese Weise wird eine modulare Vorrichtung bereitgestellt, die es ermöglicht, auf einfache Weise Informationen und/oder Daten und/oder Wissen von weiteren Rechensystemen der Anlage und/oder von Sensorvorrichtungen der Anlage und/oder von Mensch-Maschine-Schnittstellen zu ermitteln. Dazu ist es nicht erforderlich, dass die Informationen und/oder das Wissen zentral in einem Rechensystem gebündelt sind. Über die Verbindung des Rechensystems mit weiteren Rechensystemen und/oder Sensorvorrichtungen der Anlage und/oder Mensch-Maschine-Schnittstellen ist es möglich, Informationen und/oder Wissen über die gesamte Anlage einzuholen und an Mensch-Maschine-Schnittstellen und/oder an weitere Rechensysteme und/oder an Sensorvorrichtungen weiterzugeben und/oder weiter zu verarbeiten.

Auf diese Weise kann die Anlage flexibel mit weiteren Rechensystemen, Sensorvorrichtungen und/oder Mensch-Maschine-Schnittstellen ergänzt werden oder weitere Rechensysteme, Sensorvorrichtungen und/oder Mensch-Maschine-Schnittstellen der Anlage können ausgetauscht werden, ohne dass es erforderlich ist, in einem zentralen Rechensystem entsprechende Daten oder Informationen zu löschen oder zu ändern. Da zur Ermittlung der Daten auf die weiteren Rechensysteme und/oder Sensorvorrichtungen und/oder Mensch-Maschine-Schnittstellen zugegriffen werden kann, kann auf ein Daten-Update in einem zentralen Rechensystem verzichtet werden. Zudem ist es auf diese Weise möglich, Informationen der weiteren Rechensysteme, Sensorvorrichtungen und/oder Mensch-Maschine-Schnittstellen abhängig von vorgegebenen Randbedingungen für einen Zugriff freizugeben oder nicht. Weiterhin ist es durch das vorgeschlagene modulare System möglich, Informationen, Daten und Wissen der einzelnen weiteren Rechensysteme, Sensorvorrichtungen und/oder Mensch-Maschine-Schnittstellen getrennt zu halten und nur bestimmte Informationen, Daten, Steuerdaten und/oder technisches Wissen der einzelnen weiteren Rechensysteme, Sensorvorrichtungen und/oder Mensch-Maschine-Schnittstellen an das Rechensystem weiterzugeben. Somit wird ein Vermischen der Informationen, Daten, Steuerdaten und/oder des technischen Wissens der weiteren Rechensysteme, Sensorvorrichtungen und/oder Mensch-Maschine-Schnittstellen vermieden. Zudem ermöglicht dieser modulare Ansatz einen besseren Überblick und eine Abtrennung der Funktionen der weiteren Rechensysteme, Sensorvorrichtungen und/oder Mensch-Maschine-Schnittstellen. Dies ist insbesondere bei einer Suche nach einer Fehlfunktion der Anlage von Vorteil, da der Datenaustausch zwischen den weiteren Rechensystemen, Sensorvorrichtungen und/oder Mensch-Maschine-Schnittstellen das Auffinden einer Fehlfunktion der technischen Anlage vereinfacht.

Eine Information kann beispielsweise einen Betriebszustand wenigstens einer Teilanlage der Anlage, oder einen Betriebszustand der Anlage darstellen. Zudem kann eine Information ein Steuerwert der Anlage darstellen, mit dem die Anlage von dem Rechensystem oder einem weiteren Rechensystem angesteuert wird. In einer Ausführungsform kann die Information auf Kameradaten basieren, die einen Bereich der Anlage optisch erfassen. Somit kann die Information wenigstens ein Bild eines Teils der Anlage oder eine Videosequenz, die einen Teil der Anlage zeigt, darstellen. Die Information basierend auf Kameradaten, insbesondere ein Bild, ermöglicht beispielsweise eine optische Auswertung eines Betriebszustandes der Anlage, wobei bei der Auswertung der Kameradaten eine künstliche Intelligenz eingesetzt werden kann. Zudem stellt beispielsweise ein Bild oder eine Videosequenz eine für eine Bedienperson schnell und einfach erfassbare Information dar, die sich zur Beurteilung des Betriebszustandes der Anlage oder zur Beurteilung einer Steuergröße der Anlage gut eignet. Das Ergebnis der Analyse kann auch von dem Rechensystem oder einem weiteren Rechensystem verwendet werden, um Steuerdaten für die Anlage zu ändern. Somit wird die Bedienbarkeit und Steuerung der technischen Anlage sowohl für die Bedienperson als auch für die Rechensysteme vereinfacht.

In einer Ausführungsform ist das Rechensystem ausgebildet, um die eingeholte Information in Form von wenigstens einem Bild oder einer Videosequenz an die Mensch-Maschine-Schnittstelle auszugeben. Beispielsweise kann die Mensch-Maschine-Schnittstelle wenigstens einen Bildschirm oder mehrere Bildschirme aufweisen. Zudem kann abhängig von einer Einstellung durch eine Bedienperson eine gewünschte Information in Form eines Bildes auf einem Bildschirm oder auf mehreren Bildschirmen dargestellt werden. Die Auswahl der Informationen, die über die Mensch-Maschine-Schnittstelle ausgegeben wird, kann von einer Bedienperson oder automatisch von dem Rechensystem abhängig von Betriebsparametern oder Betriebszuständen der Anlage und/oder abhängig von Steuerdaten der Anlage festgelegt werden. Dadurch wird eine optimierte Auswahl der ausgegebenen bzw. dargestellten Information über die Mensch-Maschine-Schnittstelle erreicht. Somit kann mit wenigen Bildschirmen, insbesondere mit nur einem Bildschirm die für den jeweiligen Betriebszustand oder das jeweilige Steuerdatum wesentliche Information dargestellt oder ausgegeben werden. Somit können Bildschirme eingespart werden und/oder eine verbesserte Informationsdarstellung oder Informationsausgabe erreicht werden. Über die Mensch-Maschine-Schnittstelle können nicht nur Bilder, sondern auch Daten, Betriebszustände, Steuerdaten usw. dargestellt werden.

In einer Ausführungsform ist das Rechensystem ausgebildet, um aus der Anfrage die mit der Anfrage gesuchte Information zu ermitteln. Das Rechensystem ist zudem ausgebildet ist, um festzustellen, welches weitere Rechensystem und/oder welche Sensorvorrichtung und/oder welche Mensch-Maschine-Schnittstelle die gesuchte Information liefern kann. Dabei kann das Rechensystem z.B. eine Wahrscheinlichkeit ermitteln, mit der das weitere Rechensystem und/oder die Sensorvorrichtung und/oder die Mensch-Maschine-Schnittstelle die gesuchte Information liefern kann. In der Regel gibt das Rechensystem die Anfrage an das weitere Rechensystem und/oder die Sensorvorrichtung und/oder die Mensch-Maschine-Schnittstelle weiter, die die höchsten Wahrscheinlichkeiten aufweisen. Dadurch wird der Aufwand für eine erfolgreiche Suche reduziert.

In einer weiteren Ausführung ist das Rechensystem ausgebildet, um über ein NLU Programm aus einer in Textform vorliegenden Anfrage die durch die Anfrage gesuchte Information zu ermitteln. Zudem kann das Rechensystem auf ein Datenmodell über die weiteren Rechensysteme und/oder die Sensorvorrichtungen und/oder die Mensch-Maschine-Schnittstellen zugreifen. Das Datenmodell gibt einen Hinweis darauf, auf welche Informationen die weiteren Rechensysteme und/oder Sensorvorrichtungen und/oder Mensch-Maschine-Schnittstellen zugreifen können. Weiterhin ist das Rechensystem ausgebildet, um anhand des Datenmodells die weiteren Rechensysteme und/oder die Sensorvorrichtungen und/oder die Mensch-Maschine-Schnittstellen zu ermitteln, die die mit der Anfrage gesuchte Information liefern können. Beispielsweise kann das Rechensystem ausgebildet sein, um anhand des Datenmodells Wahrscheinlichkeiten zu ermitteln, mit denen die weiteren Rechensysteme und/oder die Sensorvorrichtungen und/oder die Mensch-Maschine-Schnittstellen die Information ermitteln können.

In einer Ausführungsform weist das Datenmodell für die weiteren Rechensysteme und/oder die Sensorvorrichtungen und/oder die Mensch-Maschine-Schnittstellen festgelegte Beispielsätze für Suchanfragen auf, mit denen nach Informationen in den weiteren Rechensystemen und/oder in den Sensorvorrichtungen und/oder in den Mensch-Maschine-Schnittstellen gesucht werden kann. Das Rechensystem ermittelt, insbesondere mit Hilfe eines NLU Programms, durch einen Vergleich der festgelegten Beispielsätze mit der Anfrage, insbesondere basierend auf der mit der Anfrage gesuchten Information, welche weiteren Rechensysteme und/oder welche Sensorvorrichtungen und/oder welche Mensch-Maschine-Schnittstellen die gesuchte Information liefern können. Zudem kann das NLU Programm ermitteln, mit welcher Wahrscheinlichkeit welches weitere Rechensystem und/oder welche Sensorvorrichtung und/oder welche Mensch-Maschine-Schnittstelle die gesuchte Information liefern kann.

In einer Ausführung empfängt das Rechensystem als Antwort auf eine übermittelte Anfrage nach einer Information von dem angefragten weiteren Rechensystem und/oder Sensorvorrichtung und/oder Mensch-Maschine-Schnittstelle eine weitere Anfrage nach einer weiteren Information über die Anlage. Das Rechensystem ermittelt anhand der weiteren Anfrage, welches weitere Rechensystem und/oder welche Sensorvorrichtung und/oder welche Mensch-Maschine-Schnittstelle die weitere Anfrage beantworten kann. Das Rechensystem ist ausgebildet, um über die Schnittstelle die angefragte weitere Information von dem wenigstens einen ermittelten weiteren Rechensystem und/oder von der wenigstens einen ermittelten Sensorvorrichtung und/oder von der wenigstens einen ermittelten Mensch-Maschine-Schnittstelle einzuholen. Das Rechensystem gibt die eingeholte weitere Information über die Schnittstelle an das anfragende weitere Rechensystem und/oder an die anfragende Sensorvorrichtung der Anlage und/oder an die anfragende Mensch-Maschine-Schnittstelle aus. Somit kann eine Information beispielsweise von mehreren weiteren Rechensystemen und/oder Sensorvorrichtungen und/oder Mensch-Maschine-Schnittstellen zusammen ermittelt und an das Rechensystem übermittelt werden.

In einer weiteren Ausführung ist das Rechensystem ausgebildet, um abhängig von wenigstens einem vorgegebenen Betriebszustand der Anlage und/oder einem vorgegebenen Steuerwert für die Anlage eine festgelegte Information über die Schnittstelle von wenigstens einem weiteren Rechensystem und/oder einer Sensorvorrichtung und/oder von einer Mensch-Maschine-Schnittstelle einzuholen. Das Rechensystem kann die selbständig eingeholte Information über die Schnittstelle an ein weiteres Rechensystem und/oder an eine Sensorvorrichtung und/oder an eine Mensch-Maschine-Schnittstelle ausgeben.

Beispielsweise können abhängig von festgelegten Situationen wie Störungen der Anlage automatisch gewünschte Informationen, Daten und/oder Bilder ermittelt werden und an weitere Rechensysteme weiter und/oder Sensorvorrichtungen und/oder Mensch-Maschine-Schnittstellen ausgegeben werden. Somit wird automatisch eine Anpassung der ermittelten und zur Verfügung gestellten Informationen erreicht. Durch die automatische Anpassung der Informationen wird eine verbesserte Steuerung der Anlage mithilfe der weiteren Rechensysteme und/oder mithilfe einer Bedienperson über die Mensch-Maschine-Schnittstelle und/oder mithilfe der Steuervorrichtungen erreicht.

Abhängig von der gewählten Ausführungsform kann beispielsweise durch eine Bedienperson festgelegt werden, bei welchen Betriebszuständen und/oder bei welchen vorgegebenen Steuerwerten welche festgelegte Information über die erste Schnittstelle von wenigstens einem weiteren Rechensystem und/oder wenigstens einer Sensorvorrichtung und/oder einer Mensch-Maschine-Schnittstelle eingeholt wird, und an welches weitere Rechensystem und/oder welche Sensorvorrichtung und/oder welche Mensch-Maschine-Schnittstelle die eingeholte Information übermittelt wird. Somit kann die Informationsgewinnung und der Informationsfluss beispielsweise durch eine Bedienperson konfiguriert werden. Dazu weisen die Mensch-Maschine-Schnittstellen entsprechende Eingabemittel auf. Auf diese Weise kann die Überwachung und Steuerung der Anlage und insbesondere die Mensch-Maschine-Schnittstelle individuell angepasst werden.

In einer weiteren Ausführungsform ist das Rechensystem ausgebildet, um eine Anfrage in Form einer akustischen Anfrage, insbesondere in Form einer Sprachanfrage, in einen Text umsetzen zu können und den Text als Anfrage weiter zu verarbeiten. Durch die Umsetzung der akustischen Anfrage in den Text, der einen Programmbefehl darstellen kann, kann die in der akustischen Anfrage gewünschte Information über die Schnittstellen gesucht und eingeholt werden. Auf diese Weise wird eine vereinfachte Steuerung und Überwachung der Vorrichtung ermöglicht. Weiterhin ist das Rechensystem ausgebildet, um die über die erste Schnittstelle eingeholte Information über die erste Schnittstelle an ein weiteres Rechensystem und/oder eine Sensorvorrichtung und/oder über die zweite Schnittstelle an die Mensch-Maschine-Schnittstelle auszugeben. Beispielsweise weist die Mensch-Maschine-Schnittstelle ein Mikrofon für eine Spracheingabe auf. Zudem kann das Rechensystem über einen Datenspeicher verfügen, in dem abgespeicherte akustische Sprachbefehle festgelegten Programmbefehlen zugeordnet sind. Auf diese Weise wird die Umsetzung der akustischen Anfrage in Programmbefehle der Rechensysteme vereinfacht. Dabei kann das akustische Sprachsignal, d.h. die Sprache, zuerst in einen Text und anschließend der Text in einen Programmbefehl für ein Programm, insbesondere für ein Programm eines Rechensystems oder eines weiteren Rechensystems umgewandelt werden. Das Programm kann z.B. als Anwendungsprogramm oder als Assistentenprogramm ausgebildet sein.

In einer weiteren Ausführungsform ist das Rechensystem ausgebildet, um wenigstens zu festgelegten Zeitpunkten, insbesondere kontinuierlich, einen Betriebszustand der Anlage und/oder eine Produktionsqualität der Anlage und/oder einen Wartungszustand der Anlage zu erfassen und abzuspeichern. In einer weiteren Ausführungsform ist das Rechensystem ausgebildet, um Betriebszustände der Anlage und/oder Produktionsqualitäten der Anlage und/oder Wartungszustände der Anlage, die zu verschiedenen Zeiten erfasst wurden, weiter zu verarbeiten oder miteinander zu vergleichen. Zudem kann abhängig von der gewählten Ausführungsform der erfasste Betriebszustand der Anlage und/oder die erfasste Produktionsqualität der Anlage und/oder der erfasste Wartungszustand der Anlage über die erste Schnittstelle einem weiteren Rechensystem und/oder einer Sensorvorrichtung und/oder über die zweite Schnittstelle an die Mensch-Maschine-Schnittstelle ausgegeben werden. Somit können automatisch die weiteren Rechensysteme und/oder Sensorvorrichtungen und/oder eine Mensch-Maschine-Schnittstelle und damit eine Bedienperson über wesentliche Parameter der Anlage informiert werden.

In einer weiteren Ausführungsform ist das Rechensystem ausgebildet, um die erfassten Betriebszustände und/oder Produktionsqualitäten und/oder Wartungszustände zu analysieren. Beispielsweise können Betriebszustände der Anlage, die zu verschiedenen Zeiten erfasst wurden, miteinander vergleichen werden. Beispielsweise können Produktqualitäten der Anlage, die zu verschiedenen Zeiten erfasst wurden, miteinander vergleichen werden. Beispielsweise können Wartungszustände der Anlage, die zu verschiedenen Zeiten erfasst wurden, miteinander vergleichen werden. Dabei können beispielsweise Datenbanken, abgespeicherte Auswerteverfahren, künstliche Intelligenzen usw. verwendet werden. Mithilfe der Analyse können zusätzliche Informationen über die Anlage und/oder Handlungsempfehlungen ermittelt und an die weiteren Rechensysteme und/oder die Sensorvorrichtungen und/oder die Mensch-Maschine-Schnittstelle ausgegeben werden. Weiterhin können die analysierten Daten auch in einem Datenspeicher eines Rechensystems abgespeichert werden. Auf diese Weise kann eine spätere Analyse der Funktion der Anlage, insbesondere eine Fehlersuche verbessert werden.

In einer weiteren Ausführung können über die Schnittstelle weitere Rechensysteme für Teilanlagen der Anlage mit dem Rechensystem verbunden werden, wobei die weiteren Rechensysteme eine Anlagensteuerung und/oder eine Zustandsüberwachung und/oder ein Wartungssystem für wenigstens eine Teilanlage der Anlage ausführen und/oder einen Ersatzteilkatalog für wenigstens eine Teilanlage der Anlage aufweisen, wobei jede Teilanlage eine Dokumentation über die Teilanlage aufweist. Das Rechensystem kann ausgebildet sein, um über die Schnittstelle auf die Dokumentationen der Teilanlagen der Anlage zuzugreifen, Informationen in den Dokumentationen zu suchen und über die Schnittstelle an ein weiteres Rechensystem und/oder an eine Sensoreinrichtung und/oder an eine Mensch-Maschine-Schnittstelle auszugeben. Auf diese Weise kann das Rechensystem Informationen in den Dokumentationen der Teilanlagen suchen und über die erste Schnittstelle an ein weiteres Rechensystem und/oder eine Sensorvorrichtung und/oder über die zweite Schnittstelle an eine Mensch-Maschine-Schnittstelle zu übergeben. Auf diese Weise ist es nicht erforderlich, dass die Informationen über die Teilanlagen zentral gesammelt werden. Bei Bedarf kann auf die einzelnen Informationen der Teilanlagen, insbesondere auf die Dokumentationen der Teilanlagen, die an die Anlage angeschlossen sind, zugegriffen werden.

Zudem kann das Rechensystem ausgebildet sein, um mithilfe eines Wartungs-/Betriebsprogramms wenigstens eine Information über die Anlage zu ermitteln, Anweisungen über die Schnittstelle auszugeben, durchgeführte Schritte zu dokumentieren und/oder in eine Steuerung der Anlage einzugreifen.
Dabei kann das Wartungs-/Betriebsprogramm auf hinterlegtes Wissen und/oder erlerntes Wissen zurückgreifen. Insbesondere kann das Wartungs-/Betriebsprogramm eine künstliche Intelligenz nutzen und insbesondere ein mithilfe der künstlichen Intelligenz erlerntes Wissen bei der Dokumentation oder der Steuerung der Anlage berücksichtigen. Beispielsweise kann das Wartungs-/Betriebsprogramm Auswertungen mit Datenanalysemethoden, wie z.B. Deep Learning, Machine Learning, Support Vector Maschinen durchführen.

In einer weiteren Ausführungsform ist das Rechensystem ausgebildet, um über eine Schnittstelle mithilfe von standardisierten Nachrichten und/oder standardisierten Kommunikationsprotokollen mit wenigstens einem weiteren Rechensystem und/oder Sensorvorrichtungen und/oder mit Mensch-Maschine-Schnittstellen zu kommunizieren, das heißt Daten und Informationen auszutauschen.

In einer Ausführung kann das Rechensystem auf einen Datenspeicher zugreifen oder weist einen Datenspeicher auf. Im Datenspeicher ist als Datenmodell eine Information darüber abgelegt ist, welche weiteren Rechensysteme und/oder welche Sensorvorrichtungen und/oder welche Mensch-Maschine-Schnittstelle über die Schnittstelle angeschlossen sind, und über welche Informationen die weiteren Rechensysteme und/oder Sensorvorrichtungen und/oder Mensch-Maschine-Schnittstelle verfügen oder zugreifen können. Auf diese Weise kann das Rechensystem bei einer Anfrage gezielt nach der in der Anfrage gewünschten Information bei wenigstens einem weiteren Rechensystem und/oder einer Sensorvorrichtung und/oder einer Mensch-Maschine-Schnittstelle suchen. Die Rechensysteme und/oder Sensorvorrichtungen und/oder Mensch-Maschine-Schnittstellen, bei denen gesucht wird, können sich ändern, insbesondere während der Laufzeit eines Programmes, das die Suche ausführt. Auf diese Weise wird die Suche nach der in der Anfrage gewünschten Information vereinfacht und ist schneller ausführbar.

Abhängig von der gewählten Ausführungsform kann die Funktionsweise des Rechensystems und/oder der weiteren Rechensysteme in Form einer elektronischen Schaltung und/oder in Form von Rechenprogrammen realisiert werden.

In einer Ausführung weist das Rechensystem ein Assistentenprogramm auf. Zudem weisen wenigstens ein weiteres Rechensystem und/oder eine Sensorvorrichtung und/oder eine Mensch-Maschine-Schnittstelle wenigstens zwei Anwendungsprogramme auf. Das Assistentenprogramm ist ausgebildet, um eine Anfrage nach einer Information über die Schnittstelle zu empfangen. Zudem ist das Assistentenprogramm ausgebildet, um abhängig von der Information, die von der Anfrage gesucht wird, das Anwendungsprogramm zu ermitteln, das die gesuchte Information bereitstellen kann. Weiterhin ist das Assistentenprogramm ausgebildet, um die Anfrage an das Anwendungsprogramm weiter zu geben, das die Information bereitstellen kann. Zudem ist das Assistentenprogramm ausgebildet, um von den Anwendungsprogrammen die gesuchte Information zu empfangen. Das Assistentenprogramm kann die von den Anwendungsprogrammen empfangene Information über die Schnittstelle an das anfragende weitere Rechensystem und/oder die anfragende Sensorvorrichtung und/oder die anfragende Mensch-Maschine-Schnittstelle ausgeben.

Die Anwendungsprogramme sind ausgebildet, um anhand der übergebenen Anfrage die gewünschte Information zu suchen. Findet das Anwendungsprogramm die gewünschte Information, so wird die gefundene Information an das Assistentenprogramm zurückgegeben. Das Assistentenprogramm ist ausgebildet, um die von den Anwendungsprogrammen erhaltene Information über die erste und/oder die zweite Schnittstelle auszugeben. Die erhaltene Information wird an das weitere Rechensystem, an die Mensch-Maschine-Schnittstelle und/oder an die Sensorvorrichtung ausgegeben, je nachdem, ob das weitere Rechensystem, die Sensorvorrichtung und/oder die Mensch-Maschine-Schnittstelle die Anfrage an das Assistentenprogramm übermittelt haben. Das Assistentenprogramm kann ausgebildet sein, um eine Freifeldsuche, eine Spracheingabe und/oder ein Maschine-zu-Maschine-Interface zu realisieren. Weiterhin kann das Assistentenprogramm webbasiert programmiert sein.

In einer Ausführungsform sind die zwei Anwendungsprogramme ausgebildet, um verschiedene Informationen und/oder Informationen mit unterschiedlicher Darstellung und/oder Informationen von verschiedenen Teilanlagen der Anlage und/oder Informationen von verschiedenen Datenbanken der Anlage zu suchen. Beispielsweise können mithilfe der Anwendungsprogramme bestimmte Betriebsdaten, bestimmte Steuerdaten, bestimmte Qualitätsdaten, vorgegebene Fehlerberichte, Daten von verschiedenen Anlagenteilen der Anlage und Daten von verschiedenen Datenbanken der Anlage gesucht werden. Zudem können die Informationen sich in der Art der Daten wie z.B. Datenwerte, Bilder, analysierte Daten, erlernte Daten, aggregierte Daten usw. unterscheiden. Weiterhin können die Informationen in Form von Dokumenten, Zeichnungen, Bildern, Abkürzungen usw. vorliegen.

In einer weiteren Ausführungsform ist das Rechensystem ausgebildet, insbesondere mithilfe des Assistentenprogramms, um Bilder, Dokumente, Webadressen von Informationen und/oder Daten über die erste und/oder die zweite Schnittstelle auszugeben. Somit können beispielsweise Informationen in Form von Bildern, in Form von Dokumenten oder in Form von Webadressen der Informationen über die erste und/oder die zweite Schnittstelle ausgegeben werden.

Es wird ein computerimplementiertes Verfahren zur Steuerung und/oder zur Überwachung einer technischen Anlage zur Metallerzeugung und/oder Metallverarbeitung bereitgestellt, das ein Assistentenprogramm mit wenigstens einer Schnittstelle zum Verbinden mit Anwendungsprogrammen verwendet. Das Assistentenprogramm erhält über die Schnittstelle eine Anfrage über eine Information über die Anlage von wenigstens einem anfragenden Anwendungsprogramm. Das Assistentenprogramm ermittelt anhand der Anfrage, welches Anwendungsprogramm die angefragte Information bereitstellen kann. Dann übermittelt das Assistentenprogramm die Anfrage an das wenigstens eine ermittelte Anwendungsprogramm, das die Information bereitstellen kann.

Das Assistentenprogramm empfängt eine Antwort von dem ermittelten Anwendungsprogramm und gibt die empfangene Antwort an das anfragende Anwendungsprogramm aus. Die eingeholte Information kann insbesondere von dem Assistentenprogramm und/oder einem der Anwendungsprogramm verwendet werden, um in die Steuerung einer Funktion der Anlage einzugreifen und die Steuerung zu ändern. Beispielsweise kann die Anlagenautomatisierung die eingeholte Information verwenden, um die Steuerung der Anlage zu ändern.

In einer Ausführungsform ermittelt das Assistentenprogramm aus der Anfrage eine mit der Anfrage gesuchte Information. Dann stellt das Assistentenprogramm mithilfe der gesuchten Information fest, welches Anwendungsprogramm die gesuchte Information liefern kann. Dabei kann das Assistentenprogramm insbesondere prüfen, mit welcher Wahrscheinlichkeit welches Anwendungsprogramm die gesuchte Information liefern kann. In der Regel gibt das Assistentenprogramm die Anfrage an die Anwendungsprogramme weiter, die die höchsten Wahrscheinlichkeiten aufweisen. Dadurch wird der Aufwand für eine erfolgreiche Suche reduziert.

In einer Ausführungsform ermittelt das Assistentenprogramm über ein NLU Programm aus einer in Text vorliegenden Anfrage die durch die Anfrage gesuchte Information. Dazu kann das Assistentenprogramm auf ein Datenmodell für die Anwendungsprogramme zugreifen. Das Datenmodell enthält einen Hinweis darauf, auf welche Informationen die Anwendungsprogramme, mit denen das Assistentenprogramm eine Kommunikation aufbauen kann, zugreifen können. Das Assistentenprogramm ermittelt insbesondere durch einen Vergleich der gesuchten Information mit dem Datenmodell, welche der Anwendungsprogramme, die gesuchte Information liefern können. Dabei kann das Assistentenprogramm beispielsweise eine Wahrscheinlichkeit ermitteln, mit der ein Anwendungsprogramm die Information ermitteln kann.

In einer Ausführungsform weist das Datenmodell für wenigstens einen Teil der Anwendungsprogramme jeweils einen festgelegten Beispielsatz für eine Suche nach Information mit dem Anwendungsprogramm auf. Die Beispielsätze stellen Suchanfragen dar, mit denen mithilfe der Anwendungsprogramme nach Informationen gesucht werden kann. Beispielsweise kann ein NLU Programm durch einen Vergleich der festgelegten Beispielsätze mit der gesuchten Information prüfen, welches Anwendungsprogramm die gesuchte Information liefern kann. Dabei kann das NLU Programm auch Wahrscheinlichkeiten für die einzelnen Anwendungsprogramme dafür ermitteln, dass ein Anwendungsprogramm die gesuchte Information liefern kann.

In einer Ausführungsform empfängt das Assistentenprogramm als Antwort auf eine Anfrage nach einer Information von dem angefragten Anwendungsprogramm eine weitere Anfrage nach einer weiteren Information über die Anlage. Das Assistentenprogramm ermittelt anhand der weiteren Anfrage, welches Anwendungsprogramm die weitere Anfrage beantworten kann. Anschließend holt das Assistentenprogramm die weitere Information von dem wenigstens einen ermittelten Anwendungsprogramm ein, wobei das Assistentenprogramm die eingeholte weitere Information an das angefragte Anwendungsprogramm ausgibt. Somit besteht die Möglichkeit, dass ein Anwendungsprogramm, das nach einer Information gefragt wurde, selbst eine Anfrage nach einer weiteren Information stellen kann. Somit kann eine Information beispielsweise von mehreren Anwendungsprogrammen zusammen ermittelt und an das Assistentenprogramm übermittelt werden. Somit kann eine Anfrage von einem Anwendungsprogramm beantwortet werden, selbst wenn das Anwendungsprogramm nur einen Teil der Anfrage beantworten kann und sich zur Beantwortung der Anfrage weitere Informationen von anderen Antwortprogrammen einholt.

In einer Ausführungsform holt das Assistentenprogramm abhängig von wenigstens einem vorgegebenen Betriebszustand der Anlage und/oder abhängig von wenigstens einem vorgegebenen Steuerwert für die Anlage eine festgelegte Information von wenigstens einem Anwendungsprogramm ein. Anschließend gibt das Assistentenprogramm die selbständig eingeholte Information an ein weiteres Anwendungsprogramm aus oder speichert die selbständig eingeholte Information in einem Datenspeicher ab.

In einer Ausführung basiert die Information auf einem Betriebszustand der Anlage oder einer Steuergröße der Anlage. Beispielsweise kann die gesuchte Information auf Kameradaten oder Videodaten basieren und insbesondere ein Bild oder eine Videosequenz darstellen.

In einer Ausführung gibt das Assistentenprogramm die eingeholte Information an das anfragende Anwendungsprogramm weiter. Zudem kann das Assistentenprogramm anstelle der Information selbst eine Webadresse oder eine Speicheradresse an das anfragende Anwendungsprogramm weiter geben. In diesem Fall kann das Anwendungsprogramm über den Zugriff auf die Webadresse oder die Speicheradresse die gesuchte Information selbst holen, bereitstellen, ausgeben und/oder abspeichern.

In einer Ausführung setzt das Assistentenprogramm eine Anfrage in Form einer akustischen Anfrage, insbesondere als Sprachanfrage in eine Programmanfrage um und sucht die in der akustischen Anfrage gewünschte Information über ein Anwendungsprogramm, wobei das Assistentenprogramm die gefundene Information an ein Anwendungsprogramm ausgibt

In einer Ausführung erfasst das Assistentenprogramm wenigstens zu festgelegten Zeitpunkten, insbesondere kontinuierlich, einen Betriebszustand der Anlage und/oder eine Produktionsqualität der Anlage und/oder einen Wartungszustand der Anlage und speichert diese in einem Datenspeicher ab und/oder gibt diese an Anwendungsprogramme weiter.

In einer Ausführung analysiert das Assistentenprogramm die erfassten Betriebszustände und/oder Produktionsqualitäten und/oder Wartungszustände mit Hilfe von technologischen Wissen und ermittelt zusätzliche Informationen und/oder Handlungsempfehlungen und/oder Steuerwerte für die Anlage und speichert diese ab und/oder gibt diese an Anwendungsprogramme insbesondere zur Überwachung und/oder zur Steuerung der Anlage aus.

In einer Ausführung sind mit dem Assistentenprogramm mehrere Anwendungsprogramme von Teilanlagen der Anlage verbunden. Die Anwendungsprogramme der Teilanlagen können beispielsweise eine Anlagensteuerung und/oder eine Zustandsüberwachung der Anlage und/oder ein Wartungssystem der Anlage und/oder einen Ersatzteilkatalog wenigstens einer Teilanlage der Anlage aufweisen. Zudem kann ein Anwendungsprogramm einer Teilanlage auf eine Dokumentation über die Teilanlage verfügen bzw. darauf zugreifen. Das Assistentenprogramm kann z.B. auf die Dokumentationen der Teilanlage zugreifen, Informationen in der Dokumentation suchen und die Informationen der Dokumentationen an ein Anwendungsprogramm weitergeben.

In einer Ausführung ermittelt das Assistentenprogramm mithilfe eines Wartungs-/Betriebsprogramms Informationen über die Anlage und gibt die Informationen oder anhand der Informationen ermittelte Anweisungen und/oder Steuerwerte für die Anlage an ein Anwendungsprogramm weiter. Weiterhin kann das Assistentenprogramm die durchgeführten Schritte dokumentieren. Zudem kann das Assistentenprogramm aufgrund der Informationen und/oder Anweisungen und/oder Steuerwerte in eine Steuerung einer Funktion der Anlage eingreifen und die Steuerung der Funktion der Anlage verändern. Zudem kann das Anwendungsprogramm aufgrund der Informationen und/oder Anweisungen selbst Steuerwerte für die Anlage ermitteln. Weiterhin kann das Anwendungsprogramm mit den Steuerwerten in eine Steuerung einer Funktion der Anlage eingreifen und die Steuerung der Funktion der Anlage verändern.

Dabei können das Assistentenprogramm und/oder das Anwendungsprogramm gespeichertes Wissen und/oder erlerntes gespeichertes Wissen, insbesondere mit künstlicher Intelligenz erlerntes gespeichertes Wissen berücksichtigen und insbesondere Auswertungen mit Datenanalyse-Methoden durchführen. Das Anwendungsprogramm kann beispielsweise ein Wartungs-/Betriebsprogramm sein.

In einer Ausführung kommuniziert das Assistentenprogramm mithilfe von standardisierten Nachrichten und/oder standardisierten Kommunikationsprotokollen mit den Anwendungsprogrammen.

In einer Ausführung greift das Assistentenprogramm auf einen Datenspeicher zu, wobei im Datenspeicher eine Information darüber abgelegt ist, welche Anwendungsprogramme über die erste Schnittstelle angeschlossen sind, und wobei insbesondere im Datenspeicher eine Information darüber abgelegt ist, über welche Daten und/oder Informationen die Anwendungsprogramme verfügen.

In einer Ausführung kommuniziert das Assistentenprogramm wenigstens mit zwei Anwendungsprogrammen, wobei das Assistentenprogramm eine Anfrage nach einer Information von einem anfragenden Anwendungsprogramm empfängt. Das Assistentenprogramm gibt abhängig von der gesuchten Information die Anfrage an eines der zwei Anwendungsprogramme weiter. Das Anwendungsprogramm, an das die Anfrage weiter gegeben wurde, sucht anhand der übergebenen Anfrage die gewünschte Information und gibt die gefundene Information an das Assistentenprogramm als Antwort zurück. Das Assistentenprogramm gibt die von dem Anwendungsprogramm erhaltene Information an das anfragende Anwendungsprogramm aus.

In einer Ausführung sind die zwei Anwendungsprogramme ausgebildet, um verschiedene Informationen und/oder Informationen mit unterschiedlicher Darstellung und/oder Informationen von verschiedenen Teilanlagen der Anlage und/oder Informationen von verschiedenen Datenbanken der Anlage zu suchen.

In einer Ausführung gibt das Assistentenprogramm die gefundenen Informationen, die beispielsweise Bilder, Dokumente oder Daten sein können, an das anfragende Anwendungsprogramm weiter. Zudem kann das Assistentenprogramm anstelle der Informationen selbst eine Webadresse oder einen Speicherort, an denen die Informationen zu finden sind, an das anfragende Anwendungsprogramm weiter.

Die Anwendungsprogramme können von einem oder mehreren der weiteren Rechensysteme und/oder Sensorvorrichtungen und/oder Mensch-Maschine-Schnittstellen ausgeführt werden.
Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen strukturellen Aufbau einer Anlage zur Metallerzeugung und/oder Metallverarbeitung;
- FIG 2: einen strukturellen Aufbau einer Vorrichtung mit einem Rechensystem, weiteren Rechensystemen, Sensorvorrichtungen und einer Mensch-Maschine-Schnittstelle zur Steuerung und/oder zur Überwachung einer technischen Anlage;
- FIG 3: eine Darstellung eines computerimplementierten Verfahrens zur Verarbeitung einer Anfrage durch das Rechensystem;
- FIG 4: einen Verfahrensablauf zur Abarbeitung einer weiteren Anfrage mithilfe des Rechensystems;
- FIG 5: einen strukturellen Aufbau einer weiteren Vorrichtung mit einem Rechensystem und weiteren Rechensystemen zur Steuerung und/oder zur Überwachung einer technischen Anlage;
- FIG 6: einen strukturellen Aufbau einer weiteren Vorrichtung mit einem Rechensystem und weiteren Rechensystemen zur Steuerung und/oder zur Überwachung einer technischen Anlage;
- FIG 7: einen strukturellen Aufbau einer weiteren Vorrichtung mit einem Rechensystem und weiteren Rechensystemen zur Steuerung und/oder zur Überwachung einer technischen Anlage, und
- FIG 8: einen strukturellen Aufbau einer weiteren Vorrichtung mit einem Rechensystem und weiteren Rechensystemen zur Steuerung und/oder zur Überwachung einer technischen Anlage.

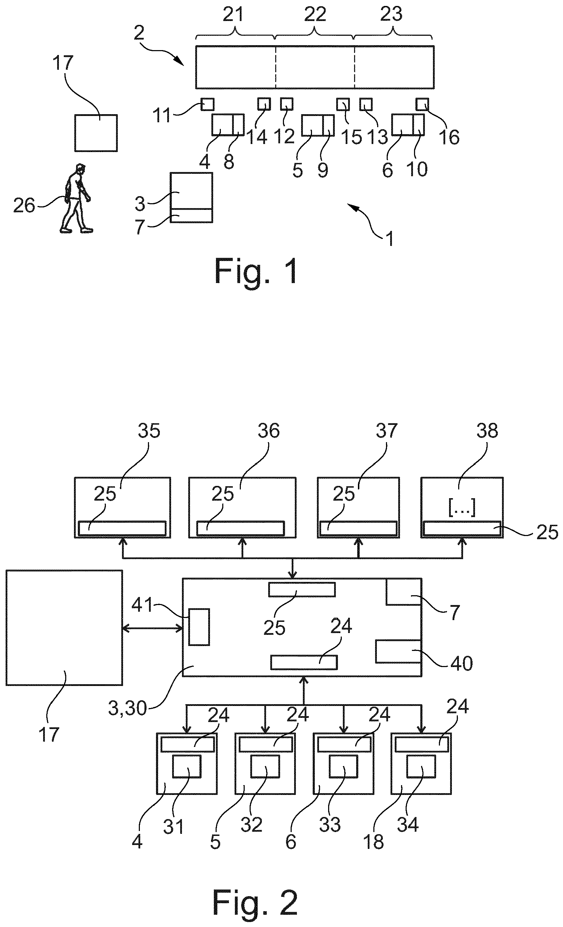

FIG 1 zeigt in einer schematischen Darstellung eine Anlage 2 mit einer Vorrichtung 1 zur Steuerung und/oder zur Überwachung der technischen Anlage 2. Die Anlage 2 ist ausgebildet, um Metall zu erzeugen und/oder Metall weiterzuverarbeiten. Beispielsweise kann die Anlage 2 zur Stahlerzeugung und/oder Stahlverarbeitung ausgebildet sein. Die Anlage 2 kann einen Hochofen, einen Konverter, einen Elektro-Lichtbogenofen, Aggregate zur Sekundärmetallurgie, eine Stranggießanlage, ein Walzwerk und/oder eine Bandbehandlungslinie aufweisen. Beispielsweise kann die Anlage als Anlage zur Eisenerzeugung, insbesondere Stahlerzeugung ausgebildet sein und beispielsweise einen Hochofen, eine direkte Reduktionsanlage des Typs Finex, des Typs Corex oder des Typs Midrex, vom Typ Drehrohr oder Drehherd mit oder ohne Submerged Arc Furnace aufweisen.

Weiterhin kann die Anlage 2 nachgeordnete Einrichtungen aufweisen, in denen aus Roheisen Stahl erzeugt wird. Beispiele derartiger Anlagen sind ein Lichtbogenofen, ein Konverter und Anlagen, in denen Pfannenprozesse erfolgen wie beispielsweise eine Vakuumbehandlungsanlage. Zudem kann die Anlage eine der Stahlerzeugung nachgeordnete Einrichtung aufweisen, in denen ein Urformen des Metalls und ein Umformen des urgeformten Metalls erfolgen. Beispiele derartiger Anlagen sind eine Stranggießanlage und Walzwerke. Bei den Walzwerken kann es sich beispielsweise um ein Walzwerk zum Walzen eines flachen Walzguts wie beispielsweise eine Vorstraße, eine Fertigstraße, ein Steckelwalzwerk und andere handeln. Weiterhin kann es sich bei den Walzwerken um ein Walzwerk zum Walzen beliebiger Querschnitte handeln, beispielsweise eines Knüppelquerschnitts. Bei dem Walzwerk kann es sich alternativ um ein Walzwerk zum Warmwalzen von Metall, ein Walzwerk zum Kaltwalzen von Metall oder ein kombiniertes Walzwerk handeln, in dem das Metall zunächst warmgewalzt und dann kaltgewalzt wird. Zudem kann die Anlage auch eine Kühlstrecke gegebenenfalls in Kombination mit einem Walzwerk aufweisen. Zudem kann die Anlage auch andere, einem Walzwerk vor- oder nachgeordnete Anlagen aufweisen, wie beispielsweise eine Glühe oder eine Beize.

Die Anlage 2 kann in mehrere Teilanlagen 21, 22, 23 unterteilt sein. Die Teilanlagen 21, 22, 23 übernehmen Teilaufgaben der Metallerzeugung und/oder Metallverarbeitung.

Zudem ist eine Vorrichtung 1 zur Steuerung und/oder zur Überwachung der Anlage 2 vorgesehen. Die Vorrichtung 1 kann ein übergeordnetes System wie eine Produktionsplanung und/oder ein Logistiksystem oder ein Steuersystem aufweisen, die beispielsweise mithilfe wenigstens einem oder mehreren der dargestellten Rechensysteme realisiert werden.

Die Vorrichtung 1 kann ein erstes Rechensystem 3 mit einem ersten Datenspeicher 7, ein zweites Rechensystem 4 mit einem zweiten Datenspeicher 8, ein drittes Rechensystem 5 mit einem dritten Datenspeicher 9 und ein viertes Rechensystem 6 mit einem vierten Datenspeicher 10 aufweisen. Abhängig von der gewählten Ausführungsform können auch mehr oder weniger Rechensysteme vorgesehen sein.

Das erste Rechensystem 3 kann als zentrales Rechensystem vorgesehen sein, das mit den weiteren Rechensystemen 4, 5, 6 in Verbindung steht. Zudem kann jedes Rechensystem 3, 4, 5, 6 mit einer ersten, zweiten bzw. dritten Sensorvorrichtung 11, 12, 13 in Verbindung stehen. Die Sensorvorrichtungen können in Form von Smarten Sensoren ausgebildet sein. Ein Smarter Sensor ist ein Sensor, der neben der eigentlichen Messgrößenerfassung auch eine Signalaufbereitung und Signalverarbeitung in einem Gehäuse vereinigt. Solche komplexen Sensoren beinhalten meist u. a. einen Mikroprozessor oder Mikrocontroller, wenn nötig auch zusätzlich mit DSP-Funktionalität und dergleichen mehr wie z.B. komplexe Logikeinheiten wie z.B. FPGAs usw. und stellen standardisierte Schnittstellen zur Kommunikation mit übergeordneten Systemen bereit, wie z.B. Feldbussysteme, Sensornetze, IO-Link usw.

Die Sensorvorrichtungen 11, 12, 13 erfassen Betriebszustände und/oder Betriebsparameter der Anlage 2 und melden diese an das entsprechende Rechensystem 4, 5, 6 weiter. Abhängig von der gewählten Ausführungsform können die Sensorvorrichtungen 11, 12, 13 auch direkt mit dem ersten Rechensystem 3 in Verbindung stehen. Zudem kann die Anlage 2 über Aktoren 14, 15, 16 verfügen, die von wenigstens einem Rechensystem 4, 5, 6 mit einem Steuerwert angesteuert werden. Die Aktoren 14, 15, 16 dienen dazu, um Betriebszustände der Anlage 2 zu verändern.

Weiterhin ist wenigstens eine Mensch-Maschine-Schnittstelle 17 vorgesehen, die mit dem ersten Rechensystem 3 verbunden ist und die zur Eingabe von Anfragen, zum Empfangen von Anfragen und zur Ausgabe von Informationen ausgebildet ist. Die Mensch-Maschine-Schnittstelle 17 kann wenigstens einen oder mehrere Bildschirme aufweisen. Zudem kann die Mensch-Maschine-Schnittstelle 17 Eingabemittel in Form einer Tastatur, einer Gestensteuerung oder eines Mikrofons und eine Sprachsteuerung aufweisen. Über die Mensch-Maschine-Schnittstelle 17 kann eine Bedienperson 26 Informationen über die Anlage 2 erfragen, wobei die Informationen über die Anlage 2 über die Mensch-Maschine-Schnittstelle 17 ausgegeben werden. Zudem kann die Mensch-Maschine-Schnittstelle 17 Anfragen von den Rechensystemen erhalten und die Anfragen beantworten. Dazu kann die Mensch-Maschine-Schnittstelle 17 eine Recheneinheit und einen Datenspeicher aufweisen. Auf der Recheneinheit können Anwendungsprogramme zum Betreiben der Mensch-Maschine-Schnittstelle ablaufen.

Jedes der Rechensysteme 3, 4, 5, 6 verfügt über wenigstens eine Recheneinheit, eine erste Schnittstelle und wenigstens ein Programm, insbesondere ein Assistentenprogramm und/oder ein Anwendungsprogramm, mit denen Daten und/oder Sensorinformationen und/oder Steuerwerte verarbeitet, empfangen und/oder ausgegeben werden können. Ein Rechensystem 4, 5, 6 kann über eine Prozessautomatisierung für die Anlage 2 in Form von elektrischen Schaltungen und/oder in Form eines Anwendungsprogrammes verfügen. Die Prozessautomatisierung kann mehrere Level umfassen. Ein Level 0 wird z.B. von der Sensorik und der Aktorik gebildet. Ein Level 1 bildet eine Basisautomatisierung zum Steuern und/oder Regeln der Anlage, die insbesondere Regelkreise implementiert. Ein Level 2 enthält eine technologische Automatisierung, die Prozessmodelle umfasst und die Sollwerte für die Regelkreise ermittelt. Zudem können weitere Level vorgesehen sein, die beispielsweise eine Produktionsplanung, eine Wartung, eine Wartungsplanung und/oder eine Qualitätsbeurteilung umfassen können.

Ein Betrieb der Anlage 2 ist in der Regel zwar hochautomatisiert mithilfe der Rechensysteme 4, 5, 6, aber nicht immer vollständig und geschlossen automatisiert. Insbesondere besteht für eine Bedienperson 26 die Möglichkeit, bei besonderen Situationen, wie beispielsweise Störungen, in die automatische Steuerung der Anlage einzugreifen. Ein Eingriff der Bedienperson 26 erfolgt z.B. über die Mensch-Maschine-Schnittstelle 17 auf wenigstens ein Rechensystem 3, 4, 5, 6 z.B. mit dem Ziel, einen sicheren Betrieb der Anlage aufrechtzuerhalten und/oder negative Folgen auf den Betrieb der Anlage als solche, die Produktivität der Anlage und/oder die Produktqualität möglichst zu vermeiden.

FIG 2 zeigt in einer schematischen Darstellung ein Grundkonzept für die Zusammenarbeit des ersten Rechensystems 3 mit dem zweiten, dritten und vierten und einem fünften Rechensystem 4, 5, 6, 18. In dem zweiten, dritten, vierten und fünften Rechensystem 4, 5, 6, 18 kann jeweils ein erstes, zweites, drittes, viertes und fünftes Anwendungsprogramm 31, 32, 33, 34, 35 ablaufen. Beispielsweise können das zweite Rechensystem 4 und das dritte Rechensystem 5 eine Prozessautomatisierung der Anlage 2 ausführen. Dabei kann das zweite Rechensystem 4 das Level 1 und das dritte Rechensystem 5 das Level 2 der Prozessautomatisierung ausführen. Das vierte Rechensystem 6 kann beispielsweise eine Zustandsüberwachung der Anlage 2 ausführen. Das fünfte Rechensystem 18 kann eine Prozessoptimierung über den gesamten Prozess durchführen, wobei Expertenwissen in Form von Expertenregeln in einem Datenspeicher des fünften Rechensystems 18 abgespeichert ist und vom fünften Rechensystem 18 berücksichtigt wird. Weiterhin kann ein Rechensystem ein Qualitätssicherungssystem ausführen. Das Qualitätssicherungssystem kann dazu vorgesehen, um die Qualität in allen Produktionsprozessen entlang der gesamten Produktionskette kontinuierlich zu überwachen und zu steuern.

In einer weiteren Ausführungsform kann eines der genannten Rechensysteme ein Instandhaltungsverfahren ausführen. Bei dem Instandhaltungsverfahren wird Expertenwissen berücksichtigt, das z.B. in einem Datenspeicher des Rechensystems abgespeichert ist, um unproduktive und zeitaufwändige Instandhaltungsroutinen in ein intelligentes Asset-Management-Programm umzuwandeln, mit dem Instandhaltungsentscheidungen strategisch und auf dynamische Weise getroffen werden können. Das Instandhaltungsprogramm kann ausgebildet sein, um Vergangenheitsdaten für eine bestimmte Anlagenkomponente abzurufen. Die Daten können Informationen darüber beinhalten, wie häufig Reparaturarbeiten erforderlich waren, wann Komponenten der Anlage zum letzten Mal ausgetauscht wurden, welche Verbesserungen vorgenommen wurden usw. Durch eine Datenanalyse lässt sich die Instandhaltung reibungsloser, kalkulierbarer und besser planen.

Die Datenkommunikation zwischen dem ersten Rechensystem 3 und dem zweiten, dritten, vierten und fünften Rechensystem 4, 5, 6, 18 erfolgt z.B. über eine erste Schnittstelle 24. Die erste Schnittstelle 24 kann beispielsweise in Form eines festgelegten Kommunikationsprotokolls mit festgelegten Nachrichten ausgebildet sein. Beispielsweise kann die erste Schnittstelle 24 in Form eines Message Brokers realisiert sein, der zum Versenden von Nachrichten zwischen den ersten und/oder zweiten Schnittstellen der Rechensysteme und/oder Sensorvorrichtungen verwendet wird. Der Message Broker kann für den Austausch von Nachrichten eines von mehreren möglichen Kommunikationsprotokollen implementieren.

Das erste Rechensystem 3 kann ein Assistentenprogramm 30 aufweisen, das eine Datenkommunikation mit dem zweiten, dritten, vierten, fünften Rechensystem 4, 5, 6, 18, der wenigstens einen Mensch-Maschine-Schnittstelle 17 und/oder den Sensorvorrichtungen realisiert. Die Mensch-Maschine-Schnittstelle 17 ist über eine weitere Schnittstelle 41, beispielsweise eine Programmierschnittstelle mit dem ersten Rechensystem 3 bzw. dem Assistentenprogramm 30 verbunden. Die Sensorvorrichtungen können z.B. über das zweite, dritte und vierte Rechensystem mit dem ersten Rechensystem in Verbindung stehen oder direkt mit dem ersten Rechensystem verbunden sein.

Weiterhin verfügt das erste Rechensystem 3 über eine zweite Schnittstelle 25, über die weitere Anwendungsprogramme 35, 36, 37, 38 mit dem Assistentenprogramm 30 in Verbindung stehen. Die weiteren Anwendungsprogramme können auf dem ersten Rechensystem 3 und/oder auf einem der weiteren Rechensysteme 4, 5, 6, 18 ablaufen. Die zweite Schnittstelle 25 kann wie die erste Schnittstelle 24 in Form eines Message Brokers ausgebildet sein. Abhängig von der gewählten Ausführungsform kann auch eine andere Art der Datenkommunikation insbesondere mit festgelegten Nachrichten und/oder einem festgelegten Kommunikationsprotokoll verwendet werden. Die weiteren Assistentenprogramme 35, 36, 37, 38 können beispielsweise für das Auffinden und Abspeichern von Informationen über die Anlage 2 vorgesehen sein.

Beispielsweise kann das fünfte Anwendungsprogramm 35 eine Bilderdatenbank über die Anlage 2 verwalten. In der Bilderdatenbank können aktuelle und/oder in der Vergangenheit aufgenommene Bilder und/oder Videosequenzen von bestimmten Abschnitten der Anlage abgespeichert sein. Das sechste Anwendungsprogramm 36 kann eine Datenbank über Abkürzungen von Komponenten, Funktionen, Daten, Betriebszuständen, Steuerdaten usw. der Anlage aufweisen. Das siebte Anwendungsprogramm 37 kann beispielsweise in Form eines Dokumentensuchprogrammes ausgebildet sein, mit dem Dokumente über Komponenten, Teile und/oder Teilanlagen der Anlage 2 gesucht werden können. Das achte Anwendungsprogramm 38 kann als Programm zur Dokumentation von Informationen über Betriebszustände und/oder Steuerdaten und/oder Betriebsparameter der Anlage 2 ausgebildet sein.

Das erste Rechensystem 3 verfügt zudem beispielsweise über ein Spracherkennungsprogramm 40, mit dem gesprochene Sprache analysiert, ausgewertet und Informationen der gesprochenen Sprache weiterverarbeitet werden kann. Beispielsweise kann als Spracherkennungsprogramm ein Rasa-NLU-Programm verwendet werden. Anstelle der ersten und zweiten Schnittstelle kann auch nur eine Schnittstelle vorgesehen sein, um das Rechensystem mit den weiteren Rechensystemen, den Sensorvorrichtungen und/oder den Mensch-Maschine-Schnittstellen zu verbinden und Daten auszutauschen.

Das Assistentenprogramm 30 realisiert ein digitales Assistenzsystem, das auf Anwendungen in Form der weiteren Anwendungsprogramme 35, 36, 37, 38 oder auf Anwendungsprogramme der weiteren Rechensysteme und/oder auf Anwendungsprogramme der Sensorvorrichtungen zugreifen kann. Zudem kann das digitale Assistenzsystem in Form des Assistentenprogramms 30 auf Daten und Informationen der Rechensysteme 4, 5, 6, 18, der Sensorvorrichtungen und/oder der Mensch-Maschine-Schnittstellen zugreifen und Anfragen und Antworten mit den Rechensystemen, den Sensorvorrichtungen und/oder den Mensch-Maschine-Schnittstellen austauschen.

Somit hat eine Bedienperson 26 die Möglichkeit, über die Mensch-Maschine-Schnittstelle 17 auf ein einfache Weise auf alle Daten der Rechensysteme und der Sensorvorrichtungen mithilfe der weiteren Anwendungsprogramme 35, 36, 37, 38 und des Assistentenprogramms 30 zuzugreifen. Weiterhin können das zweite, dritte, vierte und fünfte Rechensystem 4, 5, 6, 18 und die Sensorvorrichtungen mithilfe des Assistentenprogramms auf Daten der anderen Rechensysteme, der anderen Sensorvorrichtungen und der Mensch-Maschine-Schnittstellen zugreifen, wobei auch die Anwendungsprogramme 35, 36, 37, 38 verwendet werden können.

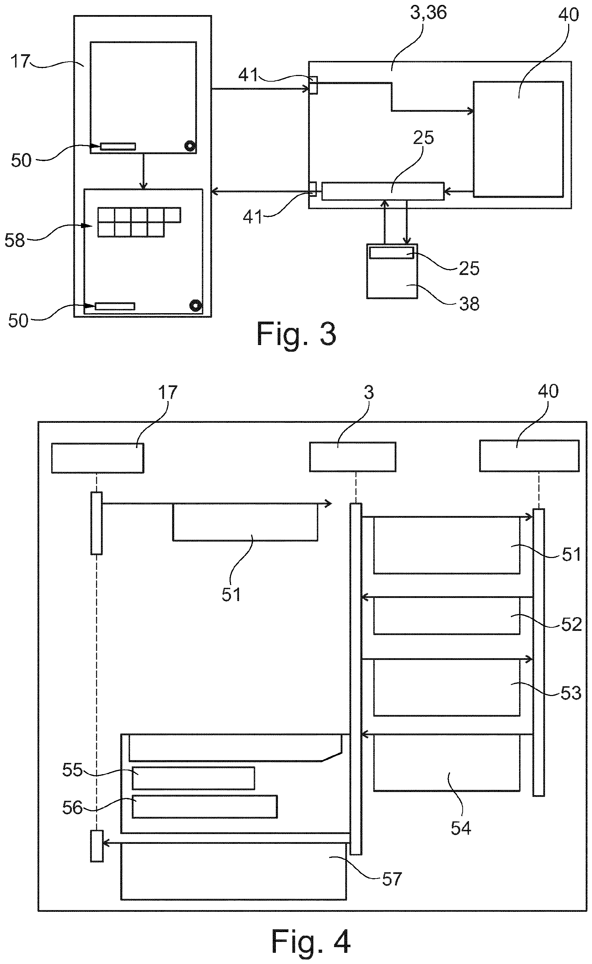

FIG 3 zeigt in einer schematischen Darstellung ein computerimplementiertes Verfahren, mit dem eine Bedienperson über die Mensch-Maschine-Schnittstelle 17 Informationen über die Anlage 2 mithilfe des ersten Rechensystems 3 einholen kann. Dazu gibt die Bedienperson z.B. über eine Tastatur in ein Eingabefeld 50 eines Bildschirms der Mensch-Maschine-Schnittstelle 17 eine Anfrage ein. Die Anfrage lautet: "Zeige mir einige Beispiele". Abhängig von der gewählten Ausführungsform kann die Anfrage auch über ein Mikrofon in Form einer gesprochenen Sprache eingegeben werden. Die Anfrage wird in einem Eingabefeld 50 des Bildschirms der Mensch-Maschine-Schnittstelle 17 dargestellt.

Bei einem folgenden Schritt wird die Anfrage (Search Request Message) an die Programmierschnittstelle 41 des ersten Rechensystems 3 übergeben. Liegt die Anfrage in Form eines geschriebenen Textes vor, so wird die Anfrage an ein Erkennungsprogramm 40 übergeben. Im Erkennungsprogramm 40 werden aus dem Text eine Funktion (Intent) und falls vorhanden ein Inhalt (Entity) für die Funktion, der die Funktion genauer spezifiziert, herausgefiltert. Die Funktion kann z.B. eine Suchfunktion zu Informationen über die Anlage, eine Steuerfunktion zum Steuern der Anlage, eine Überwachungsfunktion zum Überwachen der Anlage sein. Der Inhalt kann z.B. angeben, welche Information über die Anlage gesucht wird. Zudem kann der Inhalt angeben, welche Funktion der Anlage gesteuert werden soll und insbesondere wie die Funktion der Anlage gesteuert werden soll. Zudem kann der Inhalt angeben, welcher Teil der Anlage in Bezug auf welchen Parameter überwacht werden soll. Dazu verfügt das Erkennungsprogramm über ein Datenmodell von vorgegebenen Texten, die vorgegebenen Funktionen zugeordnet sind. Der eingegebene Text wird mit den abgespeicherten vorgegebenen Texten verglichen. Aus dem Vergleich wird wenigstens ein vorgegebener Text als mit dem eingegebenen Text übereinstimmend erkannt. Zudem wird die Funktion ermittelt, die dem übereinstimmenden vorgegebenen Text zugeordnet ist. Das Datenmodell zur Ermittlung einer Funktion und eines Inhalts kann zuvor experimentell ermittelt worden sein. Beispielsweise kann als Erkennungsprogramm ein RASA NLU Programm verwendet werden.

Liegt die Anfrage in Form einer gesprochenen Sprache vor, so wird die Anfrage an ein Erkennungsprogramm 40 übergeben, mit dem Spracheingaben verarbeitet werden können. Im Erkennungsprogramm 40 werden aus der gesprochenen Anfrage eine Funktion (Intent) und falls vorhanden ein Inhalt (Entity), der die Funktion genauer spezifiziert, herausgefiltert. Die Funktion kann z.B. eine Suchfunktion, eine Steuerfunktion, eine Überwachungsfunktion sein. Der Inhalt kann z.B. angeben, welche Information über die Anlage gesucht wird. Zudem kann der Inhalt angeben, welche Funktion der Anlage wie gesteuert werden soll. Zudem kann der Inhalt angeben, welcher Teil der Anlage in Bezug auf welchen Parameter überwacht werden soll. Dazu verfügt die Spracherkennung über ein Datenmodell von vorgegebenen Spracheingaben, die vorgegebenen Funktionen zugeordnet sind. Die eingegebene Spracheingabe wird mit den abgespeicherten vorgegebenen Spracheingaben verglichen. Aus dem Vergleich wird wenigstens eine vorgegebene Spracheingabe als mit der eingegebenen Spracheingabe übereinstimmend erkannt. Zudem wird die Funktion ermittelt, die der übereinstimmenden vorgegebenen Spracheingabe zugeordnet ist. Das Datenmodell für die Spracheingabe zur Ermittlung einer Funktion und eines Inhalts kann zuvor experimentell ermittelt worden sein. Beispielsweise kann als Spracherkennung ein RASA NLU Programm verwendet werden.

Zudem kann das Erkennungsprogramm ausgebildet sein, um zusätzlich zu der ermittelten Funktion (Intent) eine Wahrscheinlichkeit dafür anzugeben, dass die gefundene Funktion der Anfrage zugeordnet werden kann. Somit können für eine Anfrage mehrere Funktionen ermittelt werden. Bei dem weiteren Verfahren werden zuerst die Funktionen mit der höheren Wahrscheinlichkeit ausgeführt.

Bei einem folgenden Programmpunkt werden die erkannten Funktionen (Intents) und falls vorhanden die erkannten Inhalte (Entities) der Funktionen an das erste Rechensystem 3 übergeben. Das erste Rechensystem ermittelt aufgrund der erkannten Funktion "Suche Beispiele" als Anwendungsprogramm, das diese Anfrage bearbeiten kann, das achte Anwendungsprogramm 38, das in der Lage ist, Beispiele zu suchen. Das erste Rechensystem 3 gibt die Anfrage "Suche Beispiele" über die zweite Schnittstelle 25 an das achte Anwendungsprogramm 38 weiter. Die zweite Schnittstelle 25 verwendet z.B. einen Message Broker zur Kommunikation mit dem achten Anwendungsprogramm 38.

Der Message Broker der zweiten Schnittstelle übermittelt die Anfrage als TApp Request Message an das achte Anwendungsprogramm 38. Das achte Anwendungsprogramm 38 sucht gemäß der empfangenen Anfrage nach entsprechenden Beispielen in entsprechenden Datenbanken. Das achte Anwendungsprogramm 38 liefert gefundene Beispiele z.B. in Form von Daten oder Bilder als Antwort über den Message Broker 25 an die zweite Schnittstelle 25 des Rechensystems 3 zurück. Zudem oder anstelle der gefundenen Beispiele selbst können auch Speicheradressen wie z.B. Internetadressen für die gefundenen Beispiele an das Rechensystem übermittelt werden. Mithilfe des Message Brokers werden die gefundenen Beispiele und/oder die Speicheradressen über die Programmierschnittstelle 41 zurück an die Mensch-Maschine-Schnittstelle 17 in Form einer Antwort gesendet. Die Mensch-Maschine-Schnittstelle 17 stellt die übermittelten Beispiele, insbesondere die Bilder der Anlage und/oder die Speicheradressen und/oder die Speicheradressen in einem Anzeigefenster 58 dar. Abhängig von der gewählten Ausführung kann sich die Mensch-Maschine-Schnittstelle 17 anhand der Speicheradresse die Beispiele selbst holen und darstellen.

FIG 4 zeigt in einer schematischen Darstellung einen Programmablauf zur Ermittlung von Informationen über die Anlage 2 mithilfe einer Anfrage über die Mensch-Maschine-Schnittstelle 17. Dabei wird von einer Bedienperson eine Anfrage über ein Mikrofon in die Mensch-Maschine-Schnittstelle 17 eingegeben. Die Anfrage lautet: Zeige mir Bilder einer Walzanlage. Die gesprochene Anfrage 51 wird von der Mensch-Maschine-Schnittstelle 17 über die Programmierschnittstelle 41 an das Rechensystem 3 übergeben. Die Programmierschnittstelle 41 gibt die Anfrage 51 an das Erkennungsprogramm 40 weiter. Das Erkennungsprogramm verfügt über eine Spracherkennung und ist beispielsweise als Rasa-NLU Programm implementiert. Das Erkennungsprogramm 40 ermittelt wie oben beschrieben anhand der Anfrage eine Funktion und evtl. einen Inhalt der Funktion. Die Funktionen entsprechen den Anwendungsprogrammen, die den Rechensystemen, den Mensch-Maschine-Schnittstellen und/oder den Sensorvorrichtungen zur Verfügung stehen. Als Antwort 52 übermittelt das Erkennungsprogramm das Anwendungsprogramm und den Inhalt für das Anwendungsprogramm, mit dem die Anfrage 51 abgearbeitet werden kann.

In diesem Fall wird als Antwort 52 das fünfte Anwendungsprogramm "Plant Visuals" an das dritte Rechensystem 3 übergeben. Daraufhin erstellt das dritte Rechensystem 3 eine zweite Anfrage 52 mit der Frage "Zeige mir ein Bild einer Walzanlage" für das fünfte Anwendungsprogramm "Plant Visuals" an. Die zweite Anfrage 52 wird wiederum an das Erkennungsprogramm 40 übergeben. Das Erkennungsprogramm 40 ermittelt aufgrund der zweiten Anfrage 52 als Funktion "Suche ein Bild" und als Inhalt "Walzanlage". Diese Information wird als zweite Antwort 54 zurück an das Assistentenprogramm 30 des ersten Rechensystems 3 gegeben. Das Assistentenprogramm des Rechensystems 3 erstellt aufgrund der übermittelten Funktion "Suche ein Bild" und den Inhalt "Walzanlage" eine dritte Anfrage 55, die mithilfe des Message Brokers an das fünfte Anwendungsprogramm 35 mit der Funktion übermittelt wird, ein Bild für ein Walzwerk zu suchen.

Das fünfte Anwendungsprogramm 35 sucht nach Erhalt der Anfrage nach Bildern von Walzwerken in angeschlossenen Datenspeichern. Werden Bilder von Walzwerken von dem fünften Anwendungsprogramm 35 gefunden, so werden diese Bilder als dritte Antwort 56 vom fünften Anwendungsprogramm 35 zurück an das erste Rechensystem 3 gesendet. Aufgrund der dritten Antwort 56 erstellt das erste Rechensystem 3 eine vierte Antwort 57, die an die Mensch-Maschine-Schnittstelle 17 übertragen wird. Die dritte Antwort 57 enthält wenigstens ein Bild eines Walzwerkes. Die Mensch-Maschine-Schnittstelle 17 empfängt die dritte Antwort 56 und stellt das wenigstens eine übermittelte Bild auf einem Bildschirm dar.

Abhängig von der gewählten Ausführungsform können gemäß den Figuren 2 und 3 nicht nur die Mensch-Maschine-Schnittstelle 17 Anfragen an das erste Rechensystem 3 senden, sondern es können auch z.B. das zweite, dritte, vierte und/oder fünfte Rechensystem 4, 5, 6, 18 und/oder die Sensorvorrichtungen Anfragen an das erste Rechensystem 3 übermitteln. Das erste Rechensystem 3 verarbeitet Anfragen der weiteren Rechensysteme 4, 5, 6, 18 in der gleichen Weise wie Anfragen der Mensch-Maschine-Schnittstelle und gibt Antworten auf die Anfragen an das fragende Rechensystem entsprechend zurück. Auf diese Weise können Informationen zwischen den Rechensystemen, die mit dem ersten Rechensystem 3 in Verbindung stehen, auf einfache Weise ausgetauscht werden.

Zudem kann das beschriebene computerimplementierte Verfahren auch dazu verwendet werden, um eine Anfrage mithilfe verschiedener Anwendungsprogramme und/oder Rechensysteme und/oder Sensorvorrichtungen und/oder Mensch-Maschine-Schnittstellen zu beantworten.

Beispielsweise kann ein angefragtes Anwendungsprogramm oder ein angefragtes Rechensystem und/oder eine angefragte Sensorvorrichtung und/oder eine angefragte Mensch-Maschine-Schnittstelle als Antwort auf eine Anfrage nach einer Information eine weitere Anfrage nach einer weiteren Information über die Anlage an das erste Rechensystem 3 zurücksenden, von dem die Anfrage übermittelt wurde. Das erste Rechensystem ermittelt dann anhand der weiteren Anfrage beispielsweise mithilfe des Erkennungsprogramms 40, welches weitere Rechensystem 4, 5, 6, 18 und/oder welche Sensorvorrichtung 11, 12, 13 und/oder welche Mensch-Maschine-Schnittstelle 17 die weitere Anfrage beantworten kann. Dann holt das erste Rechensystem 3 über die Schnittstelle 24, 25 die angefragte weitere Information von dem wenigstens einen ermittelten weiteren Rechensystem 4, 5, 6, 18 und/oder von der wenigstens einen ermittelten Sensorvorrichtung 11, 12, 13 und/oder von der wenigstens einen ermittelten Mensch-Maschine-Schnittstelle 17 ein. Das erste Rechensystem 3 gibt die eingeholte weitere Information über die Schnittstelle 24, 25 an das anfragende weitere Rechensystem 4, 5, 6, 18 und/oder an die anfragende Sensorvorrichtung 11, 12, 13 der Anlage und/oder an die anfragende Mensch-Maschine-Schnittstelle 17 weiter. Das anfragende weitere Rechensystem 4, 5, 6, 18 und/oder an die anfragende Sensorvorrichtung 11, 12, 13 der Anlage und/oder an die anfragende Mensch-Maschine-Schnittstelle 17 verarbeiten die weitere Information, um z.B. die angefragte Information zu ermitteln und geben die angefragte Information dann an das erste Rechensystem weiter. Somit kann eine angefragte Information mithilfe mehrerer weitere Rechensysteme 4, 5, 6, 18 und/oder Sensorvorrichtungen 11, 12, 13 der Anlage und/oder Mensch-Maschine-Schnittstellen 17 erstellt werden.

Das in FIG 4 beschriebene Beispiel zeigt eine Freifeld-Sucheingabe, bei der ein NLU Programm 40 aufgerufen wird, um herauszufinden, welches Anwendungsprogramm (App) zur Weiterverarbeitung infrage kommt. Die NLU ruft ein Datenmodell auf, in dem Beispielsätze für alle verfügbaren Anwendungsprogramme enthalten sind. Die mithilfe dieses Modells bestimmten Anwendungsprogramme und der dazugehörigen Wahrscheinlichkeiten, ob das Anwendungsprogramm auf diese Suchanfrage passt, werden als Liste an das erste Rechensystem 3, insbesondere an das Assistentenprogramm 30 zurückgegeben. In dem beschriebenen Beispiel erkennt das NLU Programm, dass nach Bildern gefragt wurde, und daher das Anwendungsprogramm Plant Visuals zur Suche zu verwenden ist.

Ein konkretes Beispiel für eine NLU Programm ist die Rasa-NLU. Für jedes Anwendungsprogramm der zurückgegebenen Liste wird erneut das NLU Programm aufgerufen mit der gleichen Anfrage und dem für dieses Anwendungsprogramm bereits mit Beispielsätzen trainierten Datenmodell. Das NLU Programm kann für jedes Anwendungsprogramm ein eigenes trainiertes Datenmodell aufweisen, in dem für jede in dem Anwendungsprogramm verfügbare Funktion Beispielsätze mit verschiedenen Grammatiken und Wörtern hinterlegt wurden. Somit kann ein Mapping zwischen der Anfrage und der jeweiligen Funktion bzw. dem jeweiligen Anwendungsprogramm erstellt werden. Zurückgeliefert werden der Name der in dem Anwendungsprogramm aufzurufenden Funktion bzw. eine Liste von Funktionen mit ihren Wahrscheinlichkeiten und die benötigten zusätzlichen Informationen wie Inhalte, Parameter usw. die die Ausführung der Funktion präziser beschreiben. Fehlen diese Informationen, dann kann z.B. eine Rückfrage an die Mensch-Maschine-Schnittstelle und damit an die Bedienperson erfolgen, um die fehlenden Inhalte und Parameter nachzufragen. In dem Beispiel der FIG 4 erkennt das NLU Programm mithilfe des für Plant Visuals trainierten Datenmodells, dass die Funktion "Suche ein Bild" aufgerufen werden soll. Die zusätzliche Information ist hier "Walzanlage".

Das Assistentenprogramm 30 sendet eine Nachricht über den Message Broker an das Anwendungsprogramm Plant Visuals mit den extrahierten Informationen. In dem Anwendungsprogramm Plant Visuals wird die Funktion "Suche ein Bild" mit der zusätzlichen Information "für eine Walzanlage" aufgerufen. Als Antwort wird eine Liste von Bildern einer Walzanlage an das Assistentenprogramm übermittelt. Das Assistentenprogramm empfängt die Antwort über den Message Broker, in unserem Fall eine Liste von Bildern einer Walzanlage. Das Assistentenprogramm übermittelt als Antwort auf die gestellte Anfrage die Liste von Bildern der Walzanlage an die Mensch-Maschine-Schnittstelle 17.

Alternativ kann die Suchanfrage auch von einem Anwendungsprogramm, insbesondere von einem Anwendungsprogramm eines weiteren Rechensystems an das Assistentenprogramm übermittelt werden. Beispielsweise kann die Anfrage durch ein anderes Anwendungsprogramm auch über den Message Broker direkt an das Assistentenprogramm gesendet werden, ohne dass eine Programmierschnittstelle verwendet werden muss. Dabei können drei Möglichkeiten für die Suchanfrage auftreten. Beispielsweise kann es unbekannt sein, welches Anwendungsprogramm gefragt werden soll, wenn der Suchtext ein Freitext ist. Dabei wird wie oben verfahren und zuerst das Anwendungsprogramm ermittelt. Weiterhin kann es bereits bekannt sein, welches Anwendungsprogramm gefragt werden soll, aber es ist nicht bekannt, welche Funktion innerhalb des Anwendungsprogrammes aufgerufen werden soll und welche zusätzlichen Informationen vorliegen.

Entsprechend werden nur die oben bereits beschriebenen Schritte durchgeführt. Weiterhin kann bereits bekannt sein, welches Anwendungsprogramm gefragt werden soll, welche Funktion aufgerufen werden soll und welche zusätzlichen Informationen berücksichtigt werden sollen. Im Rahmen einer solchen Suchanfrage können einzelne Anwendungsprogramme wiederum auch zusätzliche Informationen bei anderen Anwendungsprogrammen anfragen, wie bereits oben beschrieben. Weiterhin ist jedoch sichergestellt, dass die Verkettung der Suchanfragen terminiert ist.

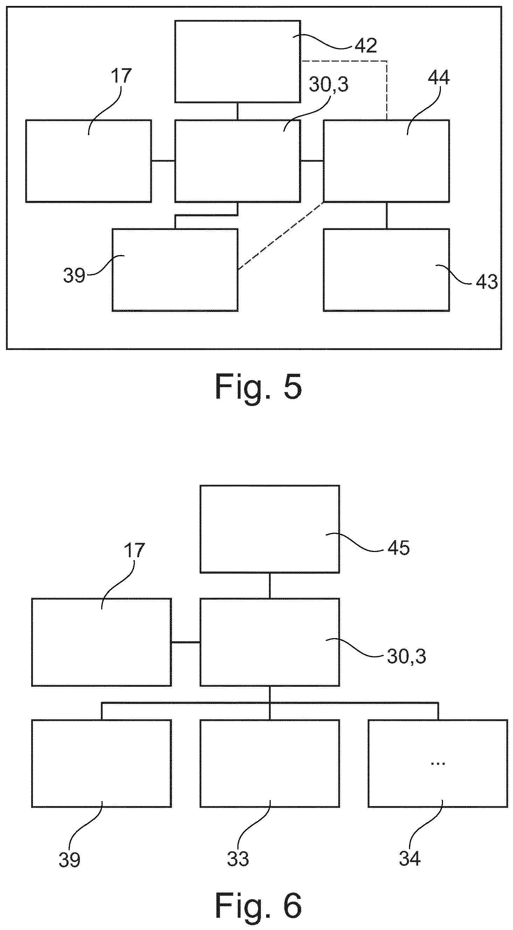

FIG 5 zeigt in einer schematischen Darstellung eine Struktur für Rechensysteme einer Anlage 2. Dabei ist das erste Rechensystem 3, insbesondere das Assistentenprogramm 30 des ersten Rechensystems mit einer Anlagenautomatisierung 39 verbunden, die ebenfalls ein Rechensystem aufweist. Weiterhin steht das erste Rechensystem 3, insbesondere das Assistentenprogramm 30 des ersten Rechensystems mit einer Mensch-Maschine-Schnittstelle 17 in Verbindung. Zudem sind Sensorvorrichtungen in Form von Kameras 44 sowohl mit dem ersten Rechensystem 3, insbesondere mit dem Assistentenprogramm 30 des ersten Rechensystems als auch beispielsweise mit der Anlagenautomatisierung 39 verbunden. Weiterhin ist ein Anzeigesystem 43 beispielsweise in Form von Monitoren vorgesehen, das direkt mit den Kameras 44 verbunden ist. Weiterhin ist ein Anwendungsprogramm in Form einer interaktiven Bedienerführung 42 vorgesehen, das mit dem ersten Rechensystem 3, insbesondere mit dem Assistentenprogramm 30 des ersten Rechensystems in Verbindung steht. Zudem kann die interaktive Bedienerführung 42 auch direkt mit der Kamera 44 verbunden sein.

Die Programmstruktur der FIG 5 weist den Vorteil auf, dass die Anlage 2 mit weniger Personal und von einem Steuerraum aus, der keinen direkten Blick auf die Anlage ermöglicht, gesteuert werden kann. Auf diese Weise können in einem Steuerraum mehrere Steuerbühnen auch von mehreren Anlagen zusammengefasst werden. Somit können mehrere Anlagen gleichzeitig von einem Steuerraum aus gefahren werden. Zudem können die Steuerzentren und die Steuerräume auch entfernt und unabhängig von dem Standort der Anlage angeordnet sein.

Um ein Fahren der Anlage, das heißt ein Betreiben der Anlage für eine Bedienperson zu ermöglichen, sind Bildschirme in Form von Mensch-Maschine-Schnittstellen 17 vorgesehen, die über Kameras 44 einen Blick auf interessante Abschnitte der Anlage ermöglichen. Zudem bieten die Mensch-Maschine-Schnittstelle 17 Bedienbildschirme, um einen Überblick über die Anlagenautomatisierung zu haben. Zudem können über die Bedienbildschirme der Mensch-Maschine-Schnittstelle Änderungen in der Anlagenautomatisierung, d.h. der Steuerung der Anlage vorgenommen werden. Es kann jedoch das Problem entstehen, dass die Anzahl der notwendigen Bildschirme, bis zu zwölf Monitore, das Auffassungsvermögen der Bediener übersteigen und somit die Anzeigen reduziert werden müssen. Daher ist es vorteilhaft, dass abhängig vom Anlagen- und Betriebszustand situativ die Anzeigen auf den Monitoren auf entsprechende Abschnitte der Anlage umgeschaltet werden. Die Umschaltung kann automatisch gemäß den oben beschriebenen Verfahren mithilfe eines Anwendungsprogrammes der Mensch-Maschine-Schnittstelle erfolgen. Der Anlagen- und Betriebszustand kann über Informationen aus der Anlagenautomatisierung, über Auswertungen der Kamerabilder z.B. unter Verwendung von künstlicher Intelligenz oder weitere Auswertungen durch ein Anwendungsprogramm des ersten Rechensystems erfolgen. Die weiteren Auswertungen können zusammen mit einem wissensbasierten, gegebenenfalls mitlernenden Entscheidungsalgorithmus, der die Monitore umschaltet, in der interaktiven Bedienerführungsanwendung 42 an das Assistentenprogramm 30 des ersten Rechensystems 3 angeschlossen sein. Das Assistentenprogramm 30 stellt einen digitalen Assistenten dar.

Die Anlagenautomatisierung ist ausgebildet, um die Bilder des Kamerasystems für die Anlagenautomatisierung zu verwenden. Mithilfe der beschriebenen Verfahren kann die Anlagenautomatisierung Bilder der Anlage selbständig einholen, auswerten und abhängig von der Auswertung eine Änderung der Steuerwerte für Funktionen der Anlage durchführen, um ein gewünschte Funktionsweise zu erreichen oder beizubehalten. Durch die direkte Anbindung wird eine geringe Latenzzeit zwischen der Übermittlung der Bilder und der Reaktion der Anlagenautomatisierung erreicht. Die Anzeigesysteme der Mensch-Maschine-Schnittstelle, die Monitore, Videowände usw. umfassen können, können auch direkt an das Assistentenprogramm 30, d.h. den Kern des ersten Rechensystems 3 angeschlossen sein.

Eine Bedienperson kann über die interaktive Bedienerführung der Mensch-Maschine-Schnittstelle Szenarien anlegen und parametrieren. Dabei kann festgelegt werden, welche Bilder welcher Kameras auf welchen Monitoren und bei welchen Ereignissen dargestellt werden. Zudem kann festgelegt werden, aufgrund welcher Ereignisse ein vorgegebenes Szenario eintritt. Mithilfe des Szenarien kann festgelegt werden, wann welches Kamerabild auf welchem Monitor des Anzeigesystems der Mensch-Maschine-Schnittstelle dargestellt wird. Weiterhin kann die Steuerung der Szenarien über eine Spracheingabe an der Mensch-Maschine-Schnittstelle festgelegt werden. Dabei können feste Kommandos hinterlegt werden, um eine Spracherkennung zu ermöglichen. Zudem kann die Steuerung einzelner Monitore über den digitalen Assistenten, d.h. das Assistentenprogramm 30 festgelegt werden. Dabei können feste Kommandos hinterlegt werden, um gezielt einzelne Monitore auf einem Bildschirm darzustellen, jenseits definierter Szenarien. Beispielsweise können bei plötzlichen Störungen die Anzeigemonitore mit festgelegten Informationen belegt werden. Dabei kann festgelegt werden, dass abhängig von der Art der Störung festgelegte Bilder von festgelegten Kameras oder Anlagenzuständen auf den Monitoren des Anzeigesystems dargestellt werden.

FIG 6 zeigt eine weitere Ausführungsform für eine Programmstruktur einer Anlage 2. Bei dieser Ausführungsform ist das Assistentenprogramm 30 des ersten Rechensystems 3 mit einer Anlagenautomatisierung 39, einem Zustandsüberwachungsprogramm 33 und weiteren Anwendungsprogrammen 34 verbunden. Zudem ist eine Mensch-Maschine-Schnittstelle 17 an das Assistentenprogramm 30 des ersten Rechensystems 3 angeschlossen. Weiterhin ist ein Diagnoseanwendungsprogramm 45 an das Assistentenprogramm 30 des ersten Rechensystems 3 angeschlossen.

Ein Zustand von Anlagen für eine Metallerzeugung und Metallverarbeitung kann komplex und schwierig erfassbar sein. Für viele Anwendungen ist es aber zielführend, ein möglichst geschlossenes Bild über den Zustand der Anlage zu bekommen. Beispielsweise kann eine Fehleranalyse, eine Qualitätsanalyse, eine Wartungsplanung und/oder eine Weiterentwicklung zum Erreichen einer Anlagenverbesserung gewünscht werden. Da das Assistentenprogramm die verschiedenen Rechensysteme und Sensorvorrichtungen der Teilanlagen der Anlage miteinander verbindet, kann ein ganzheitlicher Zustand der Anlage zu einem gewünschten Zeitpunkt/Zeitraum aggregiert werden. Zum Beispiel kann der Anlagenzustand aus einem Zustand des Zustandsüberwachungssystems (Condition Monitoring System), einem Zustand der Anlagenautomatisierung, aus einem Zustand der Produktionsqualität aus einem Qualitätsmanagement-System, einem Wartungszustand aus einem Wartungssystem, und/oder aus einem Produktionsplan eines Produktionsmanagement-Systems usw. ermittelt werden.

Weiterhin kann automatisch aus den oben genannten und aggregierten Daten mithilfe von technologischem Wissen zusätzliche Informationen abgebildet werden. Daraus können auch Handlungsempfehlungen wie Steuereingriffe in die Steuerung der Anlage oder andere komplexere Schlussfolgerungen gegeben werden. Mit den vorgeschlagenen Weiterbildungen wird eine schnellere Zustandsanalyse erreicht. Es wird eine bessere Einsicht in die Funktionsfähigkeit der Anlage bzw. die Produktion gegeben. Weiterhin bieten sich dadurch Möglichkeiten, präziser die weitere Steuerung und Analyse der Anlage durchzuführen. Durch das im Assistentenprogramm technologisch abgebildete Wissen kann konstant eine Zustandsanalyse durchgeführt werden, die unabhängig von einer Bedienperson ist. Damit sind auch Vergleiche von wiederholten Zustandsanalysen einfacher möglich. Weiterhin kann das Diagnoseprogramm bereits während der Inbetriebnahme der Anlage verwendet werden, um noch nicht vollständig in Betrieb genommene Anlagenteile zu identifizieren bzw. deren korrekte Inbetriebnahme nachzuprüfen und zu dokumentieren.

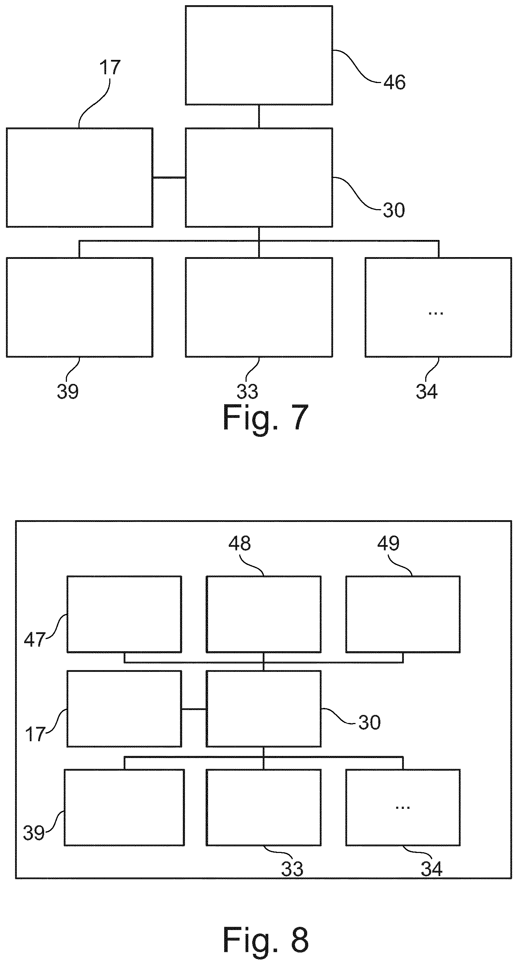

FIG 7 zeigt eine weitere Ausführungsform für eine Programmstruktur der Anlage 2, die im Wesentlichen gemäß der FIG 6 ausgebildet ist. Jedoch ist anstelle oder zusätzlich zum Diagnoseprogramm 45 ein Dokumentenprogramm 46 mit dem Assistentenprogramm 30 des ersten Rechensystems 3 verbunden.

Anlagen für eine Metallerzeugung bzw. Metallverarbeitung bestehen in der Regel aus vielen verschiedenen Einzelaggregaten, teils auch von verschiedenen Herstellern. Zu den jeweiligen Einzelaggregaten gibt es jeweils eine Dokumentation. Weiterhin ist es sinnvoll, je nach Betriebszustand aus verschiedenen Systemen wie der Anlagenautomatisierung, der Zustandsüberwachung, dem Wartungssystem, dem Ersatzteilkatalog usw. auf die Dokumentation der einzelnen Aggregate der Anlage zugreifen zu können. Vorteilhafterweise sollte aber nur an einer Stelle die Dokumentation für die gesamte Anlage vorhanden sein, um unterschiedliche Versionen oder einen hohen Wartungsaufwand zu vermeiden. Sind die verschiedenen Systeme wie Anlagenautomatisierung, Zustandsüberwachung, Wartungssystem, Ersatzteilkatalog usw. an das Assistentenprogramm angeschlossen und an diesen wiederum eine Dokumentenverwaltung mit Suchfunktion angeschlossen, kann diese Funktion einfach bereitgestellt werden. So kann neben einem automatischen Zugriff durch eines der oben genannten Systeme auch ein Zugriff durch eine Bedienperson über die Mensch-Maschine-Schnittstelle folgen. Somit kann das System um eine zielgerichtete Dokumentation erweitert werden. Eine Suchfunktion für die Dokumente kann insbesondere auf eine künstliche Intelligenz zurückgreifen, die von dem ersten Rechensystem 3 bereitgestellt wird.

FIG 8 zeigt eine weitere Programmstruktur für die Anlage 3, die im Wesentlichen der Ausführungsform der FIG 6 entspricht, wobei jedoch nicht nur ein Anwendungsprogramm, sondern mehrere Anwendungsprogramme mit dem Assistentenprogramm 30 des ersten Rechensystems 3 verbunden sind. In diesem Fall sind ein erster Wartungs-/Betriebsassistent 47, ein zweiter Wartungs-/Betriebsassistent 48 und ein dritter Wartungs-/Betriebsassistent 49 an das Assistentenprogramm 30 des ersten Rechensystems 3 angeschlossen.

An das Assistentenprogramm können Wartungs- und Betriebsassistenten angeschlossen werden, die über die Mensch-Maschine-Schnittstelle für eine Bedienperson Informationen oder Anweisungen geben kann und durchgeführte Schritte dokumentieren kann. Weiterhin können die Wartungs-/Betriebsassistentenprogramme auch direkt in den Anlagebetrieb eingreifen. Die Wartungs-/Betriebsprogramme können auf hinterlegtem Wissen basieren bzw. hinterlegte Informationen und Regeln sowie selbstständig erlerntes Wissen, z.B. durch eine künstliche Intelligenz berücksichtigen. Dabei können auch Auswertungen mithilfe von Datenanalyse-Methoden (Deep Learning, Machine Learning, Support Vector Machines usw.) durchgeführt werden. Zudem kann für jeden Anwendungsfall ein besonderes Wartungs- /Betriebsassistentenprogramm verwendet werden.

Das verwendete Assistentenprogramm bietet den Vorteil, dass eine Einbindung von weiteren Anwendungsprogrammen auf einfache Weise möglich ist. Somit kann die Anlage mit weiteren Einzelaggregaten erweitert oder einzelne Aggregate aus der Anlage genommen werden und die entsprechenden dazugehörigen Dokumentationen bzw. Programme unabhängig von der Funktionalität des jeweiligen Einzelaggregates bzw. unabhängig von der Funktionalität des jeweiligen Anwendungsprogrammes flexibel verändert werden.

Das vorgeschlagene System mit einem modularen Aufbau aus einem Assistentenprogramm und Teilanlagen, sogenannten Anwendungsprogrammen, die intern im ersten Rechensystem oder extern auf anderen Rechensystemen ablaufen können, bietet eine verbesserte Flexibilität. Die Kommunikation zwischen Teilanlagen und dem Assistentenprogramm erfolgt vorzugsweise über standardisierte Nachrichten und standardisierte Kommunikationsprotokolle. Dazu kann beispielsweise ein Message Broker verwendet werden, der dazu dient, eine sichere Nachrichtenübertragung zu gewährleisten. Darunter fällt das Puffern von Nachrichten und dass die Nachrichten in einer Reihe gespeichert werden, sodass geprüft wird, ob Nachrichten tatsächlich zugestellt wurden.

Weiterhin kann es vorteilhaft sein, dass ein Verbindungsaufbau nach einem Verbindungsabbruch automatisch wieder hergestellt wird. Ein grundsätzlicher Aufbau kann gemäß einem Apache Artemis Programm erfolgen. Mithilfe des vorgeschlagenen Systems können definierte und freie Suchabfragen von Informationen und/oder Wissen erfolgen, ohne konkret zu wissen, welches andere Teilanlagen welche Information in welcher Art und Weise liefern kann und liefern wird. Die freie Suchanfrage (z.B. Sprach-, Text-, Bild- oder Videoeingabe) kann mithilfe eines NLU-Programms (Natural Language Unit) in eine definierte Suchabfrage umgewandelt werden. Die NLU kann dabei eine künstliche Intelligenz zur inkrementellen Verbesserung der Umwandlung verwenden. Im Stand der Technik sind NLUs vorhanden, die bereits teilweise die Möglichkeit der Verwendung verschiedener Sprachen ermöglichen.

Das beschriebene System kann in einem verteilten Computernetzwerk, gegebenenfalls auch über das Internet realisiert sein. Information, Wissen und deren Verknüpfung können in den Anwendungsprogrammen hinterlegt sein.

Mithilfe des beschriebenen Systems kann eine Kommunikation der Teilanlagen zum Informations- und/oder Wissensaustausch ermöglicht werden. Dabei können sowohl definierte als auch freie Suchabfragen von Informationen und/oder Wissen durchgeführt werden, ohne konkret zu wissen, welches andere Teilanlagen welche Informationen welcher Art liefern kann und liefern wird. Zur freien Suchanfrage stehen der Bedienperson unterschiedliche Sprachen zur Verfügung, die auch erweiterbar sind. Damit sind Informationen und Wissen aus unterschiedlichen Sprachen extrahierbar.

Des Weiteren ermöglicht der modulare Aufbau des Systems ein Funktionieren des Assistentenprogramms, auch wenn a priori unklar ist, welche Teilanlage der Anlage zu einem Zeitpunkt vorhanden ist. Explizit können Teilanlagen ausgetauscht, erweitert, modifiziert, hinzugefügt oder entfernt werden. Insbesondere können sich das Leistungsspektrum der Teilanlagen und damit die gelieferten Informationen verändern. Dadurch wird ermöglicht, dass durch ein verändertes Leistungsspektrum eines der Teilanlagen die generelle Funktionsweise anderer Teilanlagen ohne Anpassungen in der Kommunikation und Funktion nicht beeinträchtigt wird. Dabei kann allerdings durch eine Veränderung der Informationen einer Teilanlage das Funktionsspektrum anderer Teilanlagen erweitert oder reduziert werden. Des Weiteren kann in den einzelnen Anwendungsprogrammen durch die Bedienperson erweiterbares Wissen in Teilanlagen abgebildet und zur Verfügung gestellt werden. Weiterhin ist das Wissen auf die Information anwendbar, um Mehrwert für die Verwendung des digitalen Assistenten zu generieren. Zudem wird die Kommunikation zwischen Teilanlagen untereinander und zwischen Teilanlagen und Bedienpersonen mithilfe von frei formulierten Anfragen nach Informationen in der Kommunikation abgebildet (siehe Einbindung der NLU im Assistentenprogramm), was eine einfache Bedienung ohne Schnittstellen-Know-How ermöglicht.

### Bezugszeichenliste

- 1: Vorrichtung
- 2: Anlage
- 3: erstes Rechensystem
- 4: zweites Rechensystem
- 5: drittes Rechensystem
- 6: viertes Rechensystem
- 7: erster Datenspeicher
- 8: zweiter Datenspeicher
- 9: dritter Datenspeicher
- 10: vierter Datenspeicher
- 11: erste Sensorvorrichtung
- 12: zweite Sensorvorrichtung
- 13: dritte Sensorvorrichtung
- 14: erster Aktor
- 15: zweiter Aktor
- 16: dritter Aktor
- 17: Mensch-Maschine-Schnittstelle
- 18: fünftes Rechensystem
- 21: erste Teilanlage
- 22: zweite Teilanlage
- 23: dritte Teilanlage
- 24: erste Schnittstelle
- 25: zweite Schnittstelle
- 26: Bedienperson
- 30: Assistentenprogramm
- 31: erstes Anwendungsprogramm
- 32: zweites Anwendungsprogramm
- 33: drittes Anwendungsprogramm
- 34: viertes Anwendungsprogramm
- 35: fünftes Anwendungsprogramm
- 36: sechstes Anwendungsprogramm
- 37: siebtes Anwendungsprogramm
- 38: achtes Anwendungsprogramm
- 39: Anlagenautomatisierung
- 40: Erkennungsprogramm
- 41: weitere Schnittstelle
- 42: interaktive Bedienerschnittstelle
- 43: Anzeigesystem
- 44: Kamera
- 45: Diagnoseprogramm
- 46: Dokumentenprogramm
- 47: erstes Wartungs-/Betriebsprogramm
- 48: zweites Wartungs-/Betriebsprogramm
- 49: drittes Wartungs-/Betriebsprogramm
- 50: Eingabefeld
- 51: Anfrage
- 52: Antwort
- 53: zweite Anfrage
- 54: zweite Antwort
- 55: dritte Anfrage
- 56: dritte Antwort
- 57: vierte Antwort
- 58: Anzeigefenster

## Patentansprüche

1. Vorrichtung (1) zur Steuerung und/oder zur Überwachung einer technischen Anlage (2) zur Metallerzeugung und/oder Metallverarbeitung, mit einem Rechensystem (3) mit wenigstens einer Schnittstelle (24, 25) zum Verbinden mit wenigstens einem weiteren Rechensystem (4, 5, 6, 18) der Anlage und/oder wenigstens einer Sensorvorrichtung (11, 12, 13) der Anlage (2) und/oder mit wenigstens einer Mensch-Maschine-Schnittstelle (17), wobei das Rechensystem (3) ausgebildet ist, um über die Schnittstelle (24, 25) eine Anfrage über eine Information über die Anlage (2) von wenigstens einem anfragenden weiteren Rechensystem (4, 5, 6, 18) und/oder von einer anfragenden Sensorvorrichtung (11, 12, 13) der Anlage und/oder von einer anfragenden Mensch-Maschine (17) zu erhalten, wobei das Rechensystem (3) ausgebildet ist, um anhand der Anfrage zu ermitteln, welches weitere Rechensystem (4, 5, 6, 18) und/oder welche Sensorvorrichtung (11, 12, 13) und/oder welche Mensch-Maschine-Schnittstelle (17) die Anfrage beantworten kann, wobei das Rechensystem (3) ausgebildet ist, um über die Schnittstelle (24, 25) die angefragte Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) einzuholen, wobei das Rechensystem (3) ausgebildet ist, um die eingeholte Information über die Schnittstelle (24, 25) an das anfragende weitere Rechensystem (4, 5, 6, 18) und/oder an die anfragende Sensorvorrichtung (11, 12, 13) der Anlage und/oder an die anfragende Mensch-Maschine-Schnittstelle (17) auszugeben.

2. Vorrichtung nach Anspruch 1, wobei das Rechensystem (3) ausgebildet ist, um aus der Anfrage eine mit der Anfrage gesuchte Information zu ermitteln, wobei das Rechensystem ausgebildet ist, um festzustellen, welches weitere Rechensystem (4, 5, 6, 18) und/oder welche Sensorvorrichtung (11, 12, 13) und/oder welche Mensch-Maschine-Schnittstelle (17) die gesuchte Information liefern kann, insbesondere mit welcher Wahrscheinlichkeit welches weitere Rechensystem (4, 5, 6, 18) und/oder welche Sensorvorrichtung (11, 12, 13) und/oder welche Mensch-Maschine-Schnittstelle (17) die gesuchte Information liefern kann.

3. Vorrichtung nach Anspruch 2, wobei das Rechensystem ausgebildet ist, um über ein NLU Programm aus einer in Text vorliegende Anfrage die durch die Anfrage gesuchte Information zu ermitteln, und wobei das Rechensystem (3) auf ein Datenmodell über die weiteren Rechensysteme (4, 5, 6, 18) und/oder Sensorvorrichtungen (11, 12, 13) und/oder Mensch-Maschine-Schnittstellen (17) zugreifen kann, wobei das Datenmodell einen Hinweis darauf gibt, auf welche Informationen die weiteren Rechensysteme (4, 5, 6, 18) und/oder Sensorvorrichtungen (11, 12, 13) und/oder Mensch-Maschine-Schnittstellen (17) zugreifen können, wobei das Rechensystem (3) ausgebildet ist, um anhand des Datenmodells die weiteren Rechensysteme (4, 5, 6, 18) und/oder die Sensorvorrichtungen (11, 12, 13) und/oder die Mensch-Maschine-Schnittstellen (17) zu ermitteln, die die gesuchte Information liefern können, und wobei insbesondere das Rechensystem ausgebildet ist, um anhand des Datenmodells Wahrscheinlichkeiten zu ermitteln, mit denen die weiteren Rechensysteme (4, 5, 6, 18) und/oder die Sensorvorrichtungen (11, 12, 13) und/oder die Mensch-Maschine-Schnittstellen (17) die gesuchte Information ermitteln können.

4. Vorrichtung nach Anspruch 3, wobei das Datenmodell für die weiteren Rechensysteme (4, 5, 6, 18) und/oder Sensorvorrichtungen (11, 12, 13) und/oder Mensch-Maschine-Schnittstellen (17) festgelegte Beispielsätze für Suchanfragen aufweist, mit denen nach Informationen in den weiteren Rechensysteme (4, 5, 6, 18) und/oder den Sensorvorrichtungen (11, 12, 13) und/oder den Mensch-Maschine-Schnittstellen (17)gesucht werden kann, wobei das Rechensystem (3) ausgebildet ist, um durch einen Vergleich der festgelegten Beispielsätze mit der Anfrage, insbesondere mit der mit der Anfrage gesuchten Information, ermittelt, welches weitere Rechensystem (4, 5, 6, 18) und/oder welche Sensorvorrichtung (11, 12, 13) und/oder welche Mensch-Maschine-Schnittstelle (17) die gesuchte Information liefern kann.

5. Vorrichtung nach einem der vorhergehenden Ansprüche, wobei das Rechensystem (3) ausgebildet ist, um als Antwort auf eine Anfrage nach einer Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) eine weitere Anfrage nach einer weiteren Information über die Anlage zu erhalten, wobei das Rechensystem (3) ausgebildet ist, um anhand der weiteren Anfrage zu ermitteln, welches weitere Rechensystem (4, 5, 6, 18) und/oder welche Sensorvorrichtung (11, 12, 13) und/oder welche Mensch-Maschine-Schnittstelle (17) die weitere Anfrage beantworten kann, wobei das Rechensystem (3) ausgebildet ist, um über die Schnittstelle (24, 25) die angefragte weitere Information von dem wenigstens einen ermittelten weiteren Rechensystem (4, 5, 6, 18) und/oder von der wenigstens einen ermittelten Sensorvorrichtung (11, 12, 13) und/oder von der wenigstens einen ermittelten Mensch-Maschine-Schnittstelle (17) einzuholen, wobei das Rechensystem (3) ausgebildet ist, um die eingeholte weitere Information über die Schnittstelle (24, 25) an das anfragende weitere Rechensystem (4, 5, 6, 18) und/oder an die anfragende Sensorvorrichtung (11, 12, 13) der Anlage und/oder an die anfragende Mensch-Maschine-Schnittstelle (17) auszugeben.

6. Vorrichtung nach einem der vorhergehenden Ansprüche, wobei das Rechensystem (3) ausgebildet ist, um abhängig von wenigstens einem vorgegebenen Betriebszustand der Anlage (2) und/oder einem vorgegebenen Steuerwert für die Anlage (2) eine festgelegte Information über die Schnittstelle (24) von wenigstens einem weiteren Rechensystem (4, 5, 6, 18) und/oder einer Sensorvorrichtung (11, 12, 13) und/oder einer Mensch-Maschine-Schnittstelle einzuholen, wobei das Rechensystem (3) ausgebildet ist, um die selbständig eingeholte Information über die Schnittstelle (24) an ein weiteres Rechensystem (4, 5, 6, 18) und/oder eine Sensorvorrichtung (11, 12, 13) und/oder an die Mensch-Maschine-Schnittstelle (17) auszugeben.

7. Vorrichtung nach einem der vorhergehenden Ansprüche, wobei das Rechensystem (3) ausgebildet ist, um eine Anfrage in Form einer akustischen Anfrage, insbesondere in Form einer Sprachanfrage, in einen Text umsetzen zu können und den Text als Anfrage weiter zu verarbeiten.

8. Vorrichtung nach einem der vorhergehenden Ansprüche, wobei über die Schnittstelle (24) weitere Rechensysteme (4, 5, 6, 18) für Teilanlagen (21, 22, 23) der Anlage (2) verbindbar sind, wobei die weiteren Rechensysteme (4, 5, 6, 18) eine Anlagensteuerung und/oder eine Zustandsüberwachung und/oder ein Wartungssystem für wenigstens eine Teilanlage (21, 22, 23) der Anlage (2) ausführen und/oder einen Ersatzteilkatalog für wenigstens eine Teilanlage (21, 22, 23) der Anlage aufweisen, wobei jede Teilanlage eine Dokumentation über die Teilanlage (21, 22, 23) aufweist, wobei das Rechensystem (3) ausgebildet ist, um über die Schnittstelle (24) auf die Dokumentationen der Teilanlagen (21, 22, 23) der Anlage (2) zuzugreifen, Informationen in den Dokumentationen zu suchen und über die Schnittstelle an ein weiteres Rechensystem (4, 5, 6, 18) und/oder an eine Sensorvorrichtung (11, 12, 13) und/oder an eine Mensch-Maschine-Schnittstelle (17) auszugeben, und/oder wobei das Rechensystem (3) ausgebildet ist, um mithilfe eines Wartungs-/Betriebsprogramms wenigstens eine Information über die Anlage (2) zu ermitteln, Anweisungen über die Schnittstelle auszugeben, durchgeführte Schritte zu dokumentieren und/oder in eine Steuerung der Anlage (2) einzugreifen, wobei das Wartungs-/Betriebsprogramm hinterlegtes Wissen und/oder erlerntes Wissen, insbesondere mit künstlicher Intelligenz erlerntes Wissen, berücksichtigt, wobei das Wartungs-/Betriebsprogramm Auswertungen mit Datenanalyse-Methoden durchführt.

9. Vorrichtung nach einem der vorhergehenden Ansprüche, wobei das Rechensystem (3) einen Datenspeicher (7) aufweist, wobei im Datenspeicher (7) als Datenmodell eine Information darüber abgelegt ist, welche weiteren Rechensysteme (4, 5, 6, 18) und/oder Sensorvorrichtungen (11, 12, 13) und/oder Mensch-Maschine-Schnittstelle (17) über die Schnittstelle (24, 25) angeschlossen sind, und über welche Daten und/oder Informationen die weiteren Rechensysteme (4, 5, 6, 18) und/oder Sensorvorrichtungen (11, 12, 13) und/oder Mensch-Maschine-Schnittstelle (17) verfügen oder zugreifen können.

10. Vorrichtung nach einem der vorhergehenden Ansprüche, wobei das Rechensystem (3) ein Assistentenprogramm (30) aufweist, wobei wenigstens ein weiteres Rechensystem (4, 5, 6, 18) und/oder eine Sensorvorrichtung (11, 12, 13) und/oder die Mensch-Maschine-Schnittstelle (17) wenigstens zwei Anwendungsprogramme aufweisen, wobei das Assistentenprogramm (30) ausgebildet ist, um eine Anfrage nach einer Information über die Schnittstelle (24, 25) zu empfangen, wobei das Assistentenprogramm (30) ausgebildet ist, um abhängig von der Information, die von der Anfrage gesucht wird, das Anwendungsprogramm zu ermitteln, das die gesuchte Information bereitstellen kann, wobei das Assistentenprogramm (30) ausgebildet ist, um die Anfrage an das Anwendungsprogramm weiter zu geben, das die Information bereitstellen kann, wobei das Assistentenprogramm (30) von den Anwendungsprogrammen die gesuchte Information zu empfangen, wobei das Assistentenprogramm (30) ausgebildet ist, um die von den Anwendungsprogrammen empfangene Information über die Schnittstelle (24 ,25) an das anfragende weitere Rechensystem (4, 5, 6, 18) und/oder die anfragende Sensorvorrichtung (11, 12, 13) und/oder die anfragende Mensch-Maschine-Schnittstelle (17) auszugeben.

11. Verfahren zur Steuerung und/oder zur Überwachung einer technischen Anlage zur Metallerzeugung und/oder Metallverarbeitung, mit einem Assistentenprogramm mit wenigstens einer Schnittstelle zum Verbinden mit Anwendungsprogrammen, wobei das Assistentenprogramm über die Schnittstelle eine Anfrage über eine Information über die Anlage von wenigstens einem anfragenden Anwendungsprogramm erhält, wobei das Assistentenprogramm anhand der Anfrage ermittelt, welches Anwendungsprogramm die angefragte Information bereitstellen kann, wobei das Assistentenprogramm die Anfrage an das wenigstens eine ermittelte Anwendungsprogramm übermittelt, das die Information bereitstellen kann, wobei das Assistentenprogramm eine Antwort von dem ermittelten Anwendungsprogramm empfängt, und wobei das Assistentenprogramm die empfangene Antwort an das anfragende Anwendungsprogramm ausgibt.

12. Verfahren nach Anspruch 11, wobei das Assistentenprogramm aus der Anfrage eine mit der Anfrage gesuchte Information ermittelt, wobei das Assistentenprogramm mithilfe der gesuchten Information feststellt, welches Anwendungsprogramm die gesuchte Information liefern kann, insbesondere mit welcher Wahrscheinlichkeit welches Anwendungsprogramm die gesuchte Information liefern kann.

13. Verfahren nach Anspruch 12, wobei das Assistentenprogramm über ein NLU Programm aus einer in Text vorliegenden Anfrage die durch die Anfrage gesuchte Information ermittelt, und wobei das Assistentenprogramm auf ein Datenmodell für die Anwendungsprogramme zugreift, wobei das Datenmodell einen Hinweis darauf enthält, auf welche Informationen die Anwendungsprogramme zugreifen können, wobei das Assistentenprogramm anhand des Datenmodells das wenigstens eine Anwendungsprogramm ermittelt, das die gesuchte Information liefern kann, und wobei insbesondere das Assistentenprogramm anhand des Datenmodells eine Wahrscheinlichkeit ermittelt, mit der das Anwendungsprogramm die Information ermitteln kann.

14. Verfahren nach Anspruch 13, wobei das Datenmodell für die Anwendungsprogramme festgelegte Beispielsätze aufweist, mit denen nach Informationen in den Anwendungsprogrammen gesucht werden kann, wobei das NLU Programm durch einen Vergleich der festgelegten Beispielsätze mit der gesuchten Information ermittelt, welches Anwendungsprogramm die gesuchte Information liefern kann, insbesondere mit welcher Wahrscheinlichkeit welches Anwendungsprogramm die gesuchte Information liefern kann.

15. Verfahren nach einem der Ansprüche 11 bis 14, wobei das Assistentenprogramm als Antwort auf eine Anfrage nach einer Information von dem angefragten Anwendungsprogramm eine weitere Anfrage nach einer weiteren Information über die Anlage empfängt, wobei das Assistentenprogramm anhand der weiteren Anfrage ermittelt, welches Anwendungsprogramm die weitere Anfrage beantworten kann, wobei das Assistentenprogramm die weitere Information von dem wenigstens einen ermittelten Anwendungsprogramm einholt, wobei das Assistentenprogramm die eingeholte weitere Information an das anfragende Anwendungsprogramm ausgibt.
